# EUROPEAN PATENT APPLICATION

(11) **EP 4 601 065 A1**
(43) Date of publication of application: **13.08.2025**
(21) Application number: 22961255.1
(22) Date of filing: 08.10.2022
(51) Int. Cl.: H01M 10/0567

(54) **LITHIUM-ION BATTERY, ELECTROCHEMICAL APPARATUS, AND ELECTRONIC DEVICE**

(71) Applicant: Ningde Amperex Technology Limited, Zhangwan Town, Jiaocheng District Ningde City Fujian 352100 (CN)
(72) Inventor: LIU, Jian, Ningde City, Fujian 352100 (CN); LI, Wenqiang, Ningde City, Fujian 352100 (CN); TANG, Chao, Ningde City, Fujian 352100 (CN)
(74) Representative: Icosa
(86) International application number: PCT/CN2022/123917
(87) International publication number: WO 2024/073898

(57) **Abstract**

A lithium-ion battery includes a positive electrode plate, a negative electrode plate, a separator, and an electrolyte, where the electrolyte includes a first additive, and the first additive includes at least one of a compound represented by formula I-A or a compound represented by formula II-A as defined in the specification of this application. The lithium-ion battery satisfies: 0.05≤Cₚₒₛᵢₜᵢᵥₑ/X≤1.5, where Cₚₒₛᵢₜᵢᵥₑ mg/mm² represents a surface density of a positive electrode active substance layer of the positive electrode plate, and X% represents a mass percentage of the first additive in the electrolyte.

## Description

### TECHNICAL FIELD

This application pertains to the technical field of secondary batteries and specifically relates to a lithium-ion battery, an electrochemical apparatus, and an electronic device.

### BACKGROUND

Lithium-ion batteries, due to their outstanding characteristics such as light weight, high energy density, no pollution, no memory effect, and long service life, have been widely used in fields such as mobile phones, computers, household appliances, and electric tools. With the continuous updating of electronic devices and attention of people to electric tools, higher requirements are imposed on the energy density, cycling performance, safety performance, and the like of lithium-ion batteries.

As the energy density of lithium-ion batteries increases, their fast charging performance decreases. To satisfy fast charging performance and long cycle life of batteries with high energy density, low-viscosity or high-conductivity electrolytes are needed, but the use of such electrolytes can lead to safety hazards in the batteries. Therefore, how to obtain a battery with high energy density, fast charging performance, long cycle life, and safety performance is a common problem currently faced in the industry.

### SUMMARY

In view of the above problems in the prior art, this application provides a lithium-ion battery, an electrochemical apparatus, and an electronic device. An electrolyte of the lithium-ion battery includes a specified additive, so that the high-temperature storage performance, high-temperature cycling performance, and cycle life of the lithium-ion battery can be improved.

According to a first aspect of this application, a lithium-ion battery is provided, including a positive electrode plate, a negative electrode plate, a separator, and an electrolyte, where the electrolyte includes a first additive, and the first additive includes at least one of a compound represented by formula I-A or a compound represented by formula II-A:

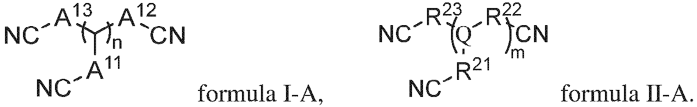

In formula I-A, n is a positive integer from 1 to 8, A¹¹, A¹², and A¹³ are each independently selected from one of structures represented by formula I-A1 or formula I-A2, and at least two of A¹¹, A¹², and A¹³ are selected from structures represented by formula I-A2:

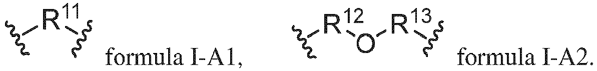

R¹¹, R¹², and R¹³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen.

In formula II-A, m is 1 or 2, and Q is selected from structures represented by formula II-A1 or formula II-A2:

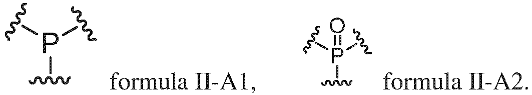

R²¹, R²², and R²³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen.

The lithium-ion battery satisfies: 0.05≤Cₚₒₛᵢₜᵢᵥₑ/X≤1.5, where Cₚₒₛᵢₜᵢᵥₑ mg/mm² represents a surface density of a positive electrode active substance layer of the positive electrode plate, and X% represents a mass percentage of the first additive in the electrolyte.

When the percentage of the above first additive in the electrolyte and a surface density of a positive electrode active material satisfy the above relation, the high-temperature storage performance, high-temperature cycling performance, and cycle life of the lithium-ion battery can be significantly improved. Without being limited by any theory or explanation, the first additive can fully act with the positive electrode active material, which reduces side reactions on the surface of the positive electrode active material, and significantly reduce side reactions of the first additive on a negative electrode side, improving the stability of solid electrolyte films on the surfaces of positive and negative electrode active materials and maintaining good deintercalation and intercalation of lithium ions at positive and negative electrode interfaces. Therefore, the lithium-ion battery can well maintain a stable equilibrium state under high-temperature conditions and is not prone to thermal runaway, improving the high-temperature cycling performance and safety performance of the battery.

In some embodiments, 0.084≤Cₚₒₛᵢₜᵢᵥₑ≤0.35, optionally 0.1≤Cₚₒₛᵢₜᵢᵥₑ≤0.26. Cₚₒₛᵢₜᵢᵥₑ falling within this range allows the positive electrode plate to have a high theoretical capacity, thereby allowing the lithium-ion battery to have a high energy density. In the lithium-ion battery of this application, the electrolyte includes the above first additive, which can effectively reduce the capacity loss of a positive electrode. Thus, the positive electrode plate can have high capacity loss, thereby increasing the energy density of the lithium-ion battery.

Optionally, a compacted density of the positive electrode active substance layer is 4.0 g/cm³ to 4.4 g/cm³. The compacted density falling within this appropriate range not only allows the positive electrode plate to have a high energy density but also allows for closer contact between active substance particles in the positive electrode active substance layer, thereby shortening transmission paths of lithium ions and improving the kinetic performance of the positive electrode plate. Thus, the fast charging performance of the lithium-ion battery can be further improved.

Optionally, a value range of X% is 0.1% to 10%. The value of X% falling within this appropriate range can ensure that the first additive forms an interface protection film with an appropriate thickness on a surface of an electrode plate, thereby effectively reducing side reactions between the electrolyte and the positive and negative electrode plates, and allowing for smooth transmission of lithium ions in the interface protection film. Thus, the cycling resistance of the lithium-ion battery can be reduced, and the kinetic performance of the lithium-ion battery can be improved, thereby improving the fast charging performance, high-temperature storage performance, and high-temperature cycling performance of the lithium-ion battery.

In some embodiments, the compound represented by formula I-A includes at least one of compounds represented by formula I-1 to formula I-17:

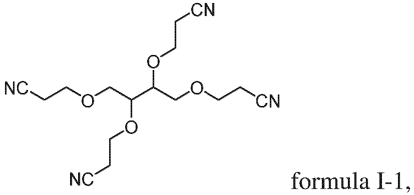

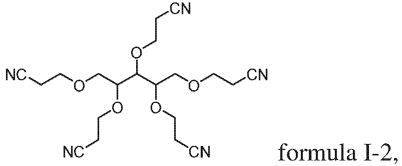

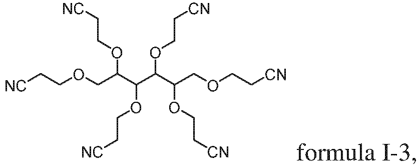

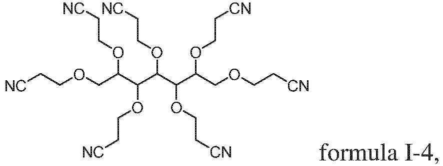

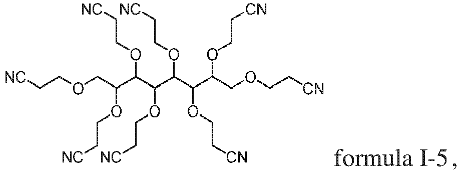

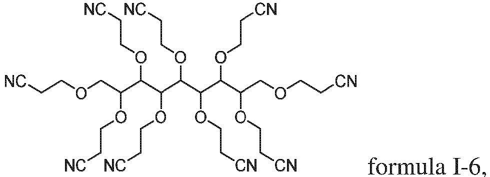

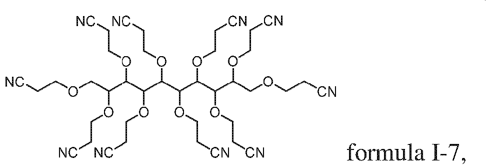

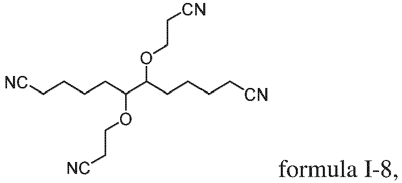

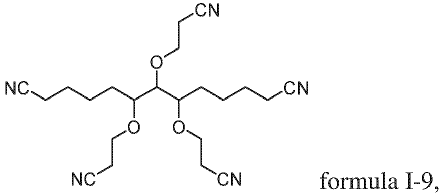

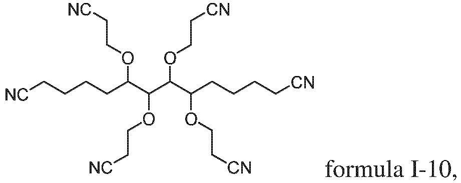

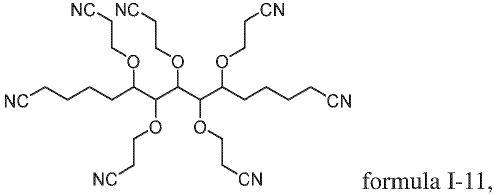

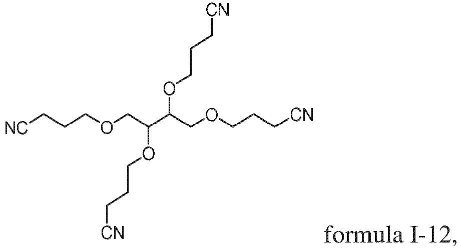

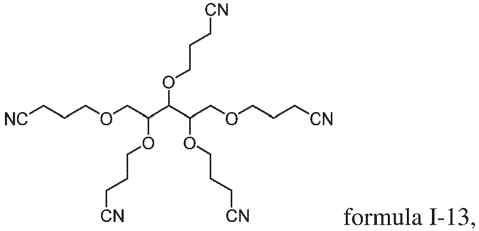

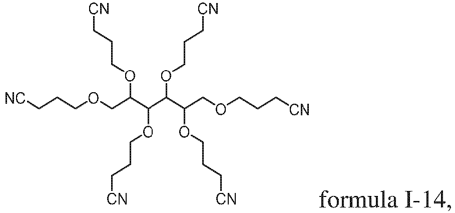

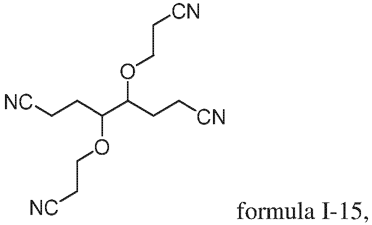

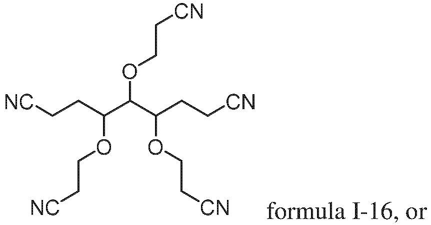

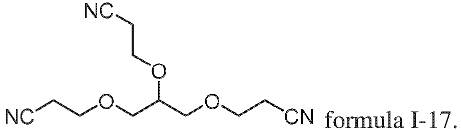

In some embodiments, the compound represented by formula II-A includes at least one of compounds represented by formula II-1 to formula II-22:

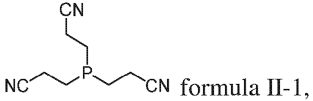

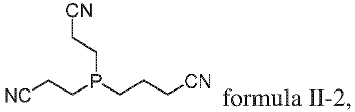

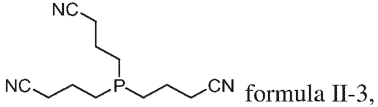

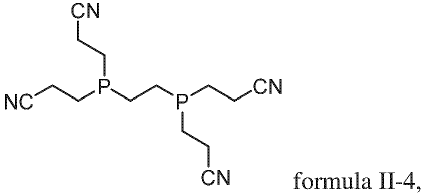

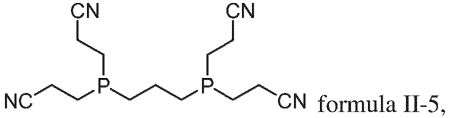

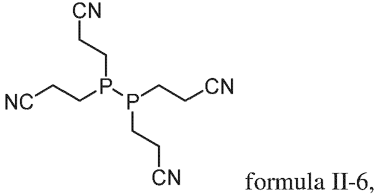

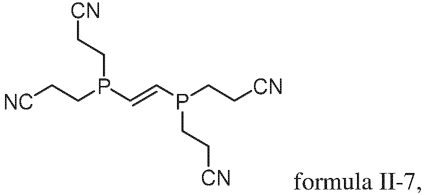

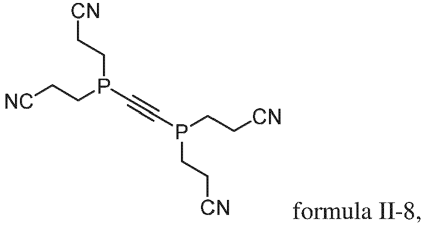

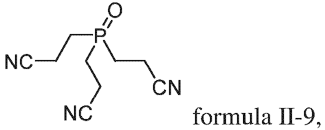

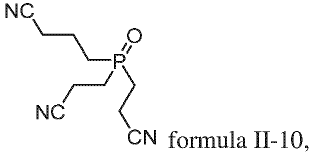

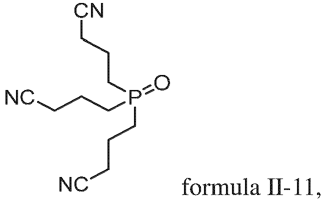

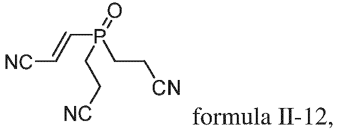

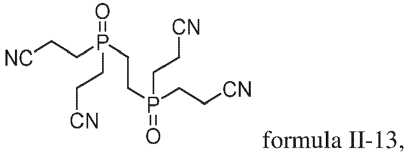

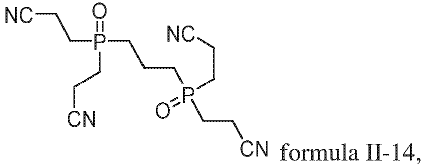

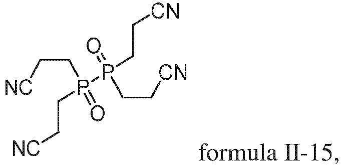

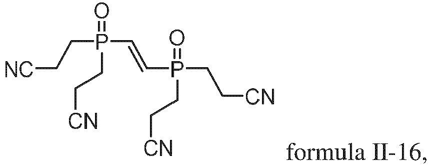

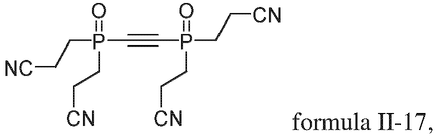

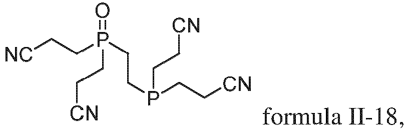

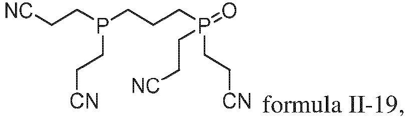

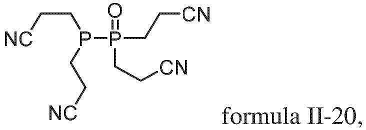

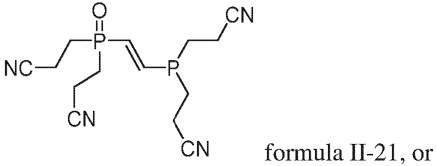

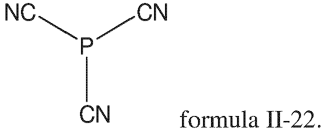

In some embodiments, the electrolyte further includes a second additive, where the second additive includes at least one of a polyphenol antioxidant, a flavonoid antioxidant, or a carotenoid antioxidant; and based on a total mass of the electrolyte, a mass percentage of the second additive is 0.01% to 1%, and preferably, the mass percentage of the second additive is 0.05% to 0.5%. When the electrolyte further includes the second additive with an antioxidation effect, the second additive acts on active oxygen at a positive electrode active substance interface, improving the stability of the positive electrode active material. When the second additive acts together with the first additive on the positive electrode active material, the dissolution of transition metal from the positive electrode active material under high-temperature and high-voltage conditions is effectively suppressed, and the continuous decomposition of the electrolyte and the occurrence of side reactions are suppressed, thereby further improving the high-temperature cycling performance of the lithium-ion battery.

In some embodiments, the electrolyte further includes a third additive, where the third additive includes a compound represented by formula III-A:

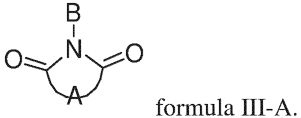

In formula III-A, A is selected from a substituted or unsubstituted C₁-C₆ alkylene group, a substituted or unsubstituted C₂-C₆ alkenylene group, a substituted or unsubstituted C₁-C₅ heteroatom-containing alkylene group, or a substituted or unsubstituted C₂-C₁₀ heteroatom-containing alkenylene group, and B is selected from hydrogen, a substituted or unsubstituted C₁-C₆ alkyl group, or a substituted or unsubstituted C₂-C₆ alkenyl group.

When substituted, a substituent group is selected from at least one of halogen, an amino group, or a cyano group, and the heteroatom is selected from at least one of S or N.

When the electrolyte further includes the third additive, the third additive participates in a formation process of the solid electrolyte films at the positive and negative electrode interfaces during formation of the battery, further improving the electrochemical stability of the interfaces. In addition, the inventors have unexpectedly found that the solid electrolyte films jointly formed by the third additive and the first additive have lower ionic resistance, which is conducive to reducing side reactions at the electrode interfaces. Therefore, the direct-current resistance of the battery is reduced, and the high-temperature cycling performance is improved.

Based on a total mass of the electrolyte, a mass percentage of the third additive is 0.01% to 2%, and preferably, the mass percentage of the third additive is 0.1% to 1%.

In some embodiments, the third additive includes at least one of compounds represented by formula III-1 to formula III-6:

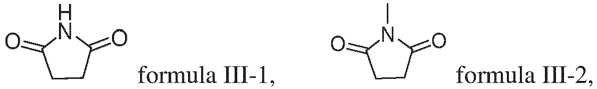

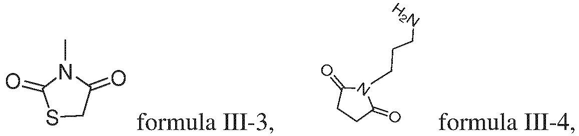

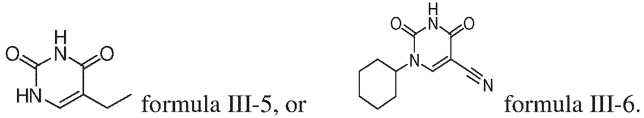

In some embodiments, the electrolyte further includes a fourth additive, where the fourth additive includes a compound represented by formula IV-A:

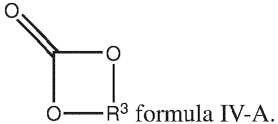

R³ is selected from a substituted or unsubstituted C₁-C₆ alkylene group or a substituted or unsubstituted C₂-C₆ alkenylene group, and when substituted, a substituent group is selected from halogen, a C₁-C₆ alkyl group, or a C₂-C₆ alkenyl group.

The fourth additive of the above type can further improve the stability and flexibility of an interface film, thereby enhancing the protection for an electrode active material, reducing the probability of contact between the electrode active material and the electrolyte, and thus alleviating the increase in battery resistance caused by the accumulation of by-products during cycling. Thus, the cycling performance and high-temperature storage performance of the battery can be further improved.

In some embodiments, the fourth additive is selected from at least one of compounds represented by formula IV-1 to formula IV-12:

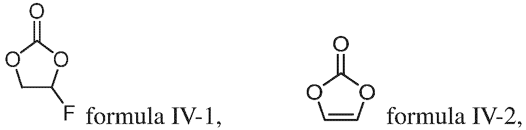

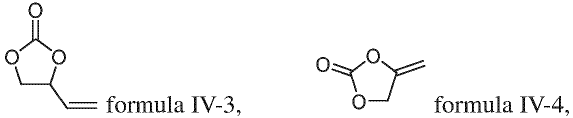

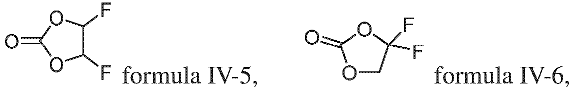

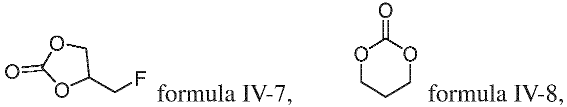

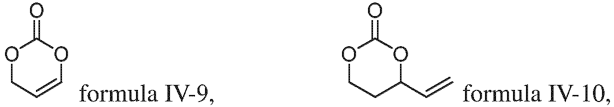

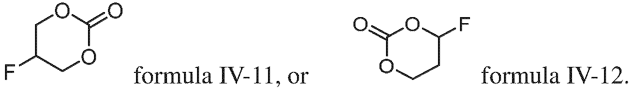

In some embodiments, based on a total mass of the electrolyte, a mass percentage of the compound represented by formula I-A is 0.01% to 5%, optionally 0.1% to 3.5%.

Optionally, based on the total mass of the electrolyte, a mass percentage of the compound represented by formula II-A is 0.01% to 5%, optionally 0.1% to 3.5%.

Optionally, based on the total mass of the electrolyte, a sum of mass percentages of the compound represented by formula I-A and the compound represented by formula II-A is 0.1% to 5%, optionally 0.5% to 4%.

According to a second aspect of this application, an electrochemical apparatus is provided, including the battery according to the first aspect of this application.

According to a third aspect of this application, an electronic device is provided, including the electrochemical apparatus according to the second aspect of this application.

The electrochemical apparatus and electronic device of this application each include the battery of this application, and therefore have at least the same advantages as the battery.

### DESCRIPTION OF EMBODIMENTS

To make the invention objectives, technical solutions, and beneficial technical effects of this application clearer, the following further describes this application in detail with reference to some embodiments. It should be understood that these embodiments described in this specification are merely intended to interpret this application, but not intended to limit this application.

For simplicity, only some numerical ranges are expressly disclosed in this specification. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, although not expressly recorded, each point or individual single numerical value between end points of a range is included in the range. Therefore, each point or individual single numerical value may itself be a lower limit or an upper limit which can be combined with any other point or individual numerical value or combined with another lower limit or upper limit to form a range not expressly recorded.

In the description of this specification, it should be noted that "more than" and "less than" are inclusive of the present number and that "more" in "one or more" means two or more than two, unless otherwise stated.

Unless otherwise stated, the terms used in this application have common meanings generally understood by persons skilled in the art. Unless otherwise stated, numerical values of parameters mentioned in this application may be measured by using various measurement methods commonly used in the art (for example, they may be tested by using the methods provided in some embodiments of this application).

The term "about" used herein is intended to describe and represent small variations. When used in combination with an event or a circumstance, the term may refer to an example in which the exact event or circumstance occurs or an example in which an extremely similar event or circumstance occurs. For example, when used in combination with a numerical value, the term may refer to a variation range of less than or equal to ±10% of the numerical value, for example, less than or equal to ±5%, less than or equal to ±4%, less than or equal to ±3%, less than or equal to ±2%, less than or equal to ±1%, less than or equal to ±0.5%, less than or equal to ±0.1%, or less than or equal to ±0.05%. In addition, quantities, ratios, and other numerical values are sometimes presented in the format of range in this specification. It should be understood that such format of range is used for convenience and simplicity and should be flexibly understood as including not only numerical values explicitly designated as falling within the range but also all individual numerical values or sub-ranges covered by the range as if each numerical value and sub-range are explicitly designated.

A list of items connected by the terms "at least one of", "at least one piece of", "at least one kind of", or the like may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single constituent or a plurality of constituents. The item B may contain a single constituent or a plurality of constituents. The item C may contain a single constituent or a plurality of constituents.

The term "alkyl group" is intended to be a linear saturated hydrocarbon structure having 1 to 20 carbon atoms. The term "alkyl group" is also intended to be a branched or cyclic hydrocarbon structure having 3 to 20 carbon atoms. For example, the alkyl group may be an alkyl group having 1 to 20 carbon atoms, an alkyl group having 1 to 10 carbon atoms, an alkyl group having 1 to 5 carbon atoms, an alkyl group having 5 to 20 carbon atoms, an alkyl group having 5 to 15 carbon atoms, or an alkyl group having 5 to 10 carbon atoms. References to an alkyl group with a specific carbon number are intended to cover all geometric isomers with the specific carbon number. Therefore, for example, "butyl group" is meant to include an n-butyl group, a sec-butyl group, an isobutyl group, a tert-butyl group, and a cyclobutyl group; and "propyl group" includes an n-propyl group, an isopropyl group, and a cyclopropyl group. Examples of the alkyl group include but are not limited to a methyl group, an ethyl group, an n-propyl group, an isopropyl group, a cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, and a norbornyl group. In addition, the alkyl group may be arbitrarily substituted.

The term "alkylene group" alone or as a part of another substituent group means a divalent free radical derived from an alkyl group.

The term "alkoxy group" is an L-O-group, where L is an alkyl group. The alkoxy group herein may be an alkoxy group having 1 to 12 carbon atoms, an alkoxy group having 1 to 10 carbon atoms, an alkoxy group having 1 to 5 carbon atoms, an alkoxy group having 5 to 12 carbon atoms, or an alkoxy group having 5 to 10 carbon atoms.

The term "alkenyl group" refers to a linear or branched monovalent unsaturated hydrocarbon group having at least one and typically having 1, 2, or 3 carbon-carbon double bonds. Unless otherwise defined, the alkenyl group typically contains 2 to 20 carbon atoms. For example, the alkenyl group may be an alkenyl group having 2 to 20 carbon atoms, an alkenyl group having 6 to 20 carbon atoms, an alkenyl group having 2 to 10 carbon atoms, or an alkenyl group having 2 to 6 carbon atoms. Representative alkenyl groups include (for example) a vinyl group, an n-propenyl group, an isopropenyl group, an n-but-2-enyl group, a but-3-enyl group, and an n-hex-3-enyl group. In addition, the alkenyl group may be arbitrarily substituted.

The term "alkenylene group" covers linear and branched alkenylene groups. References to an alkenylene group with a specific carbon number are intended to cover all geometric isomers with the specific carbon number. For example, the alkenylene group may be an alkenylene group having 2 to 20 carbon atoms, an alkenylene group having 2 to 15 carbon atoms, an alkenylene group having 2 to 10 carbon atoms, an alkenylene group having 2 to 5 carbon atoms, an alkenylene group having 5 to 20 carbon atoms, an alkenylene group having 5 to 15 carbon atoms, or an alkenylene group having 5 to 10 carbon atoms. Representative alkenylene groups include (for example) a vinylene group, a propenylene group, and a butenylene group. In addition, the alkenylene group may be arbitrarily substituted.

The term "alkynyl group" refers to a linear or branched monovalent unsaturated hydrocarbon group having at least one and usually 1, 2, or 3 carbon-carbon triple bonds. Unless otherwise defined, the alkynyl group typically contains 2 to 20 carbon atoms. For example, the alkynyl group may be an alkynyl group having 2 to 20 carbon atoms, an alkynyl group having 6 to 20 carbon atoms, an alkynyl group having 2 to 10 carbon atoms, or an alkynyl group having 2 to 6 carbon atoms. Representative alkynyl groups include (for example) an ethynyl group, a prop-2-ynyl group (n-propynyl group), an n-but-2-ynyl group, and an n-hex-3-ynyl group. In addition, the alkynyl group may be arbitrarily substituted.

The term "alkynylene group" covers linear and branched alkenylene groups. References to an alkynylene group with a specific carbon number are intended to cover all geometric isomers with the specific carbon number. For example, the alkynylene group may be an alkynylene group having 2 to 20 carbon atoms, an alkynylene group having 2 to 15 carbon atoms, an alkynylene group having 2 to 10 carbon atoms, an alkynylene group having 2 to 5 carbon atoms, an alkynylene group having 5 to 20 carbon atoms, an alkynylene group having 5 to 15 carbon atoms, or an alkynylene group having 5 to 10 carbon atoms. In addition, the alkynylene group may be arbitrarily substituted.

The term "aryl group" covers monocyclic and polycyclic systems. A polycyclic ring may have two or more rings in which two carbons are shared by two adjacent rings (the rings are "fused"), where at least one of the rings is aromatic, and other rings may be, for example, a cycloalkyl group, a cycloalkenyl group, an aryl group, a heterocyclic group, and/or a heteroaryl group. For example, the aryl group may be a C₆-C₅₀ aryl group, a C₆-C₄₀ aryl group, a C₆-C₃₀ aryl group, a C₆-C₂₀ aryl group, or a C₆-C₁₀ aryl group. Representative aryl groups include (for example) a phenyl group, a methylphenyl group, a propylphenyl group, an isopropylphenyl group, a benzyl group, a naphth-1-yl group, and a naphth-2-yl group. In addition, the aryl group may be arbitrarily substituted.

The term "arylene group" alone or as a part of another substituent group means a divalent free radical derived from an aryl group.

The term "heterocyclic group" covers aromatic and non-aromatic cyclic groups. A heteroaromatic cyclic group also means a heteroaryl group. In some embodiments, the heteroaromatic cyclic group and the hetero-non-aromatic cyclic group are each a C₁-C₅₀ heterocyclic group, a C₁-C₄₀ heterocyclic group, a C₁-C₃₀ heterocyclic group, a C₁-C₂₀ heterocyclic group, a C₁-C₁₀ heterocyclic group, and a C₁-C₆ heterocyclic group, where each heterocyclic group includes at least one heteroatom. For example, they are a morpholinyl group, a piperidinyl group, a pyrrolidinyl group, and the like, and cyclic ether such as tetrahydrofuran and tetrahydropyran. In addition, the heterocyclic group may be arbitrarily substituted.

As used herein, the term "halogen" may be F, Cl, Br, or I.

As used herein, 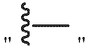 represents a binding site for binding to an adjacent atom.

The foregoing invention content of this application is not intended to describe each of the disclosed embodiments or implementations of this application. The following description illustrates exemplary embodiments in more detail by using examples. Throughout this application, guidance is provided by using a series of embodiments, and these embodiments may be used in various combinations. In the examples, enumeration is merely representative but should not be interpreted as exhaustive.

As described in the background, how to obtain a battery with high energy density, fast charging performance, long cycle life, and safety performance is a common problem currently faced in the industry. In view of this, through in-depth thought and extensive experimentation, the inventors have provided a lithium-ion battery, an electrochemical apparatus, and an electronic device, where the lithium-ion battery can have high energy density, fast charging performance, long cycle life, and safety performance.

### Lithium-ion battery

According to a first aspect of this application, a lithium-ion battery is provided, including a positive electrode plate, a negative electrode plate, a separator, and an electrolyte, where the electrolyte includes a first additive. The first additive includes at least one of a compound represented by formula I-A or a compound represented by formula II-A:

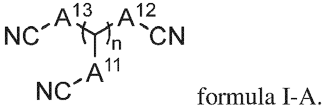

In formula I-A, n is a positive integer from 1 to 8, and when n>1, each of n A¹¹ is the same or different. A¹¹, A¹², and A¹³ are each independently selected from one of structures represented by formula I-A1 or formula I-A2, and at least two of A¹¹, A¹², and A¹³ are selected from structures represented by formula I-A2:

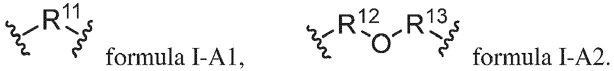

R¹¹, R¹², and R¹³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen.

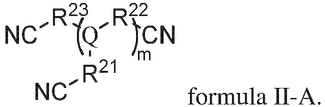

In formula II-A, m is 1 or 2, and Q is selected from structures represented by formula II-A1 or formula II-A2:

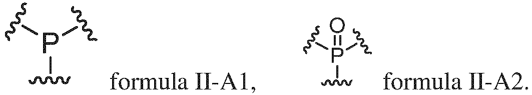

R²¹, R²², and R²³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen.

The lithium-ion battery satisfies: 0.05≤Cₚₒₛᵢₜᵢᵥₑ/X≤1.5, where Cₚₒₛᵢₜᵢᵥₑ mg/mm² represents a surface density of a positive electrode active substance layer of the positive electrode plate, and X% represents a mass percentage of the first additive in the electrolyte.

In some embodiments, the lithium-ion battery satisfies 0.05≤Cₚₒₛᵢₜᵢᵥₑ/X≤0.3.

The inventors have unexpectedly found that when the percentage of the above first additive in the electrolyte and a surface density of a positive electrode active material satisfy the above relation, the high-temperature storage performance, high-temperature cycling performance, and cycle life of the lithium-ion battery can be significantly improved. Without being limited by any theory or explanation, the first additive can fully act with the positive electrode active material, which reduces side reactions on the surface of the positive electrode active material and significantly reduce side reactions of the first additive on a negative electrode side, improving the stability of a solid electrolyte film on the surfaces of positive and negative electrode active materials and maintaining good deintercalation and intercalation of lithium ions at positive and negative electrode interfaces. Therefore, the lithium-ion battery can well maintain a stable equilibrium state under high-temperature conditions and is not prone to thermal runaway, improving the high-temperature cycling performance and safety performance of the battery.

In some embodiments, the lithium-ion battery may satisfy 0.084≤Cₚₒₛᵢₜᵢᵥₑ≤0.35, optionally 0.1≤Cₚₒₛᵢₜᵢᵥₑ≤0.26. For example, Cₚₒₛᵢₜᵢᵥₑ may be 0.084, 0.1, 0.15, 0.2, 0.26, 0.3, 0.32, or 0.35, or falls within a range defined by any of the foregoing values.

Without being limited by any theory or explanation, Cₚₒₛᵢₜᵢᵥₑ falling within the above range allows the positive electrode plate to have a high theoretical capacity, thereby allowing the lithium-ion battery to have a high energy density. In the lithium-ion battery of this application, the electrolyte includes the above first additive, which can effectively reduce the capacity loss of a positive electrode. Thus, the positive electrode plate can have high capacity extraction, thereby increasing the energy density of the lithium-ion battery.

In some embodiments, a compacted density of the positive electrode active substance layer may be 4.0 g/cm³ to 4.4 g/cm³. The compacted density of the positive electrode active substance layer may be 4.0 g/cm³, 4.1 g/cm³, 4.2 g/cm³, 4.3 g/cm³, or 4.4 g/cm³, or falls within a range defined by any of the foregoing values.

The compacted density of the positive electrode active substance layer falling within the above appropriate range not only allows the positive electrode plate to have a high energy density but also allows for closer contact between active substance particles in the positive electrode active substance layer, thereby shortening transmission paths of lithium ions and improving the kinetic performance of the positive electrode plate. Thus, the fast charging performance of the lithium-ion battery can be further improved.

In some embodiments, a value range of X% may be 0.1% to 5%. For example, X% may be 0.1%, 0.5%, 1%, 1.5%, 2%, 2.5%, 3%, or 5%, or falls within a range defined by any of the foregoing values.

Without being limited by any theory or explanation, the value of X% falling within the above appropriate range can ensure that the first additive forms an interface protection film with an appropriate thickness on a surface of an electrode plate. The interface protection film with the appropriate thickness can not only effectively reduce side reactions between the electrolyte and the positive and negative electrode plates, but also allow for smooth transmission of lithium ions in the interface protection film. Thus, the cycling resistance of the lithium-ion battery can be reduced, and the kinetic performance of the lithium-ion battery can be improved, thereby improving the fast charging performance, high-temperature storage performance, and high-temperature cycling performance of the lithium-ion battery.

In some embodiments, the compound represented by formula I-A includes at least one of compounds represented by formula I-1 to formula I-17:

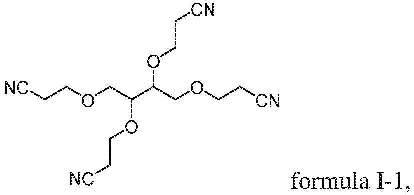

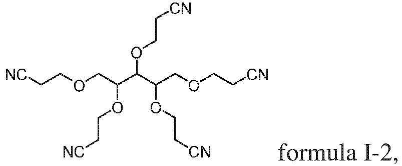

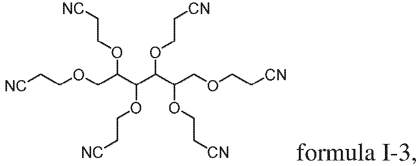

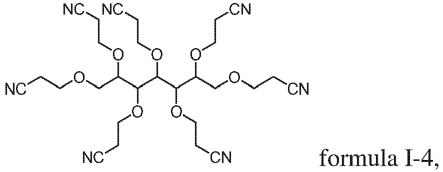

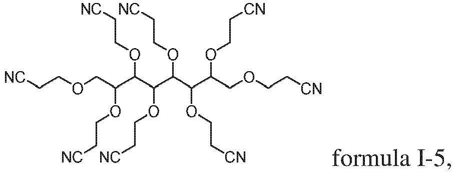

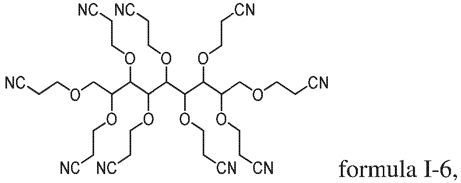

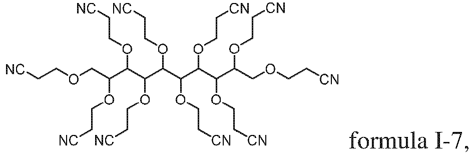

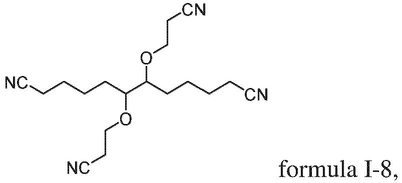

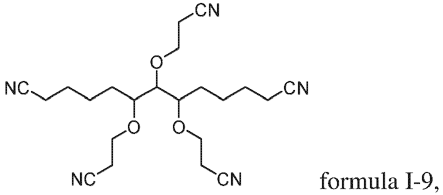

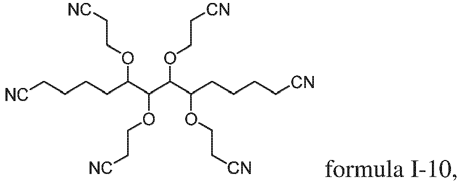

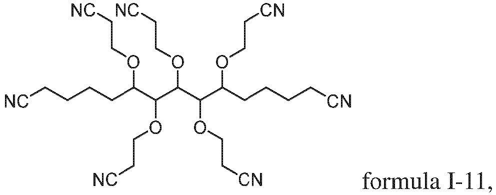

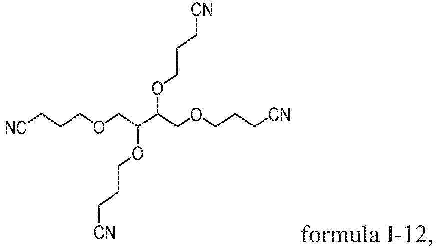

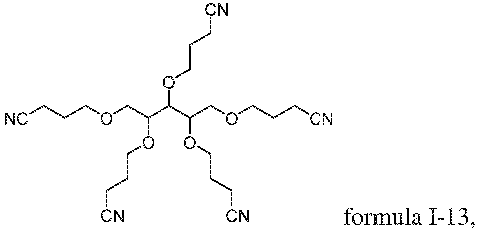

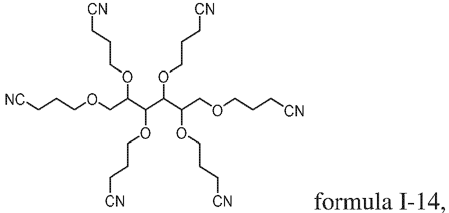

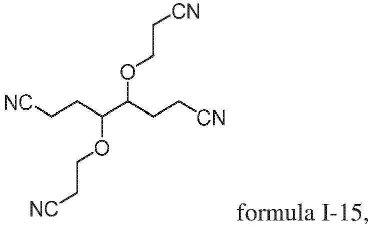

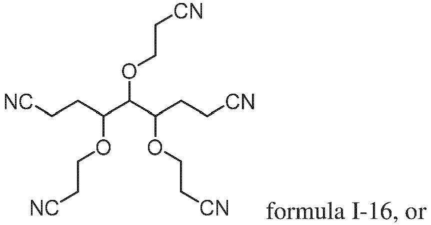

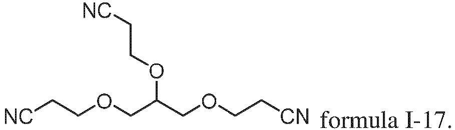

Without being limited by any theory or explanation, the compounds represented by formula I-1 to formula I-17 can form stable interface protection films on the surfaces of the positive and negative electrode plates, stabilizing high-valence transition metal in the positive electrode active substance layer and suppressing the continuous decomposition of the electrolyte and the occurrence of side reactions, thereby reducing the capacity loss of the lithium-ion battery during cycling and improving the high-temperature storage performance and long-term cycling performance of the lithium-ion battery.

In some embodiments, the compound represented by formula II-A may include at least one of compounds represented by formula II-1 to formula II-22:

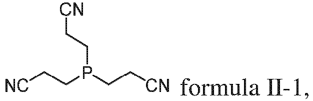

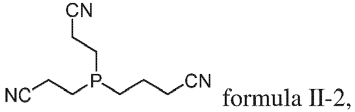

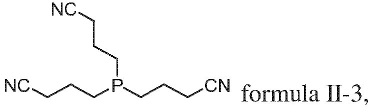

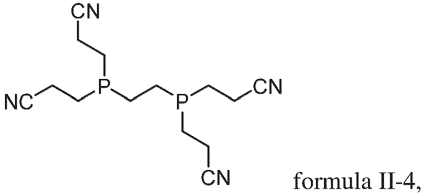

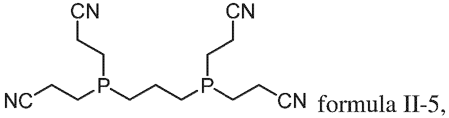

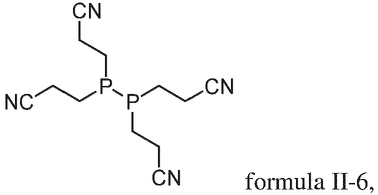

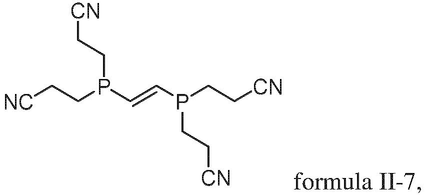

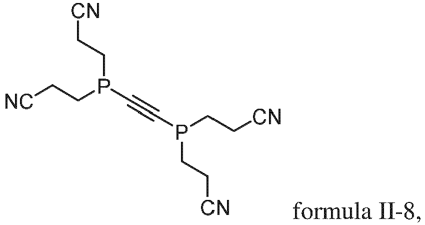

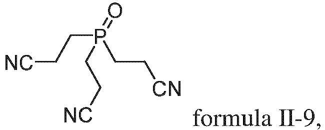

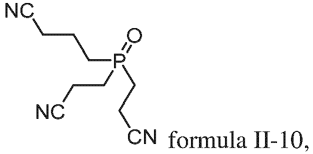

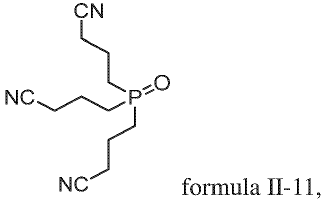

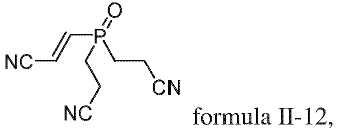

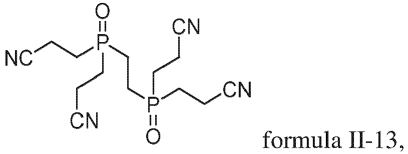

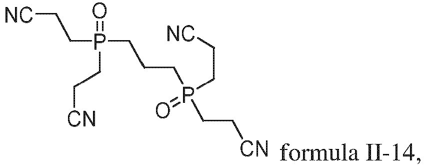

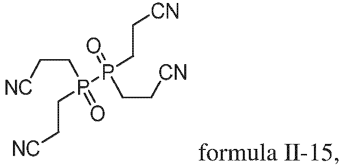

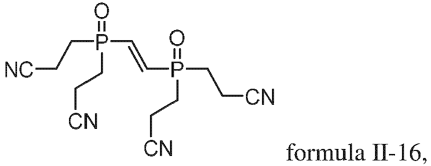

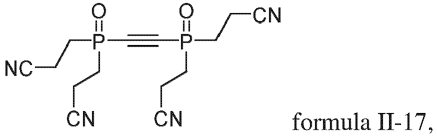

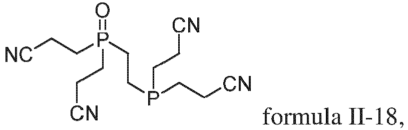

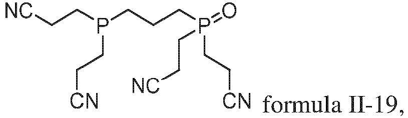

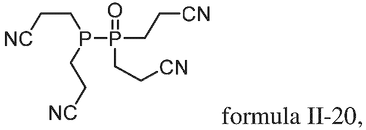

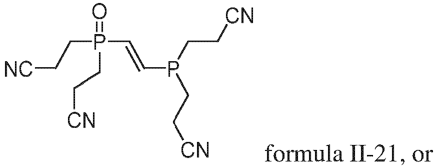

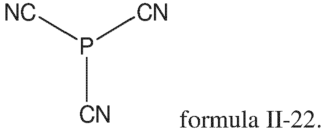

Without being limited by any theory or explanation, the compounds represented by formula II-1 to formula II-22 can form stable interface protection films on the surfaces of the positive and negative electrode plates, stabilizing high-valence transition metal in the positive electrode active substance layer and suppressing the continuous decomposition of the electrolyte and the occurrence of side reactions, thereby reducing the capacity loss of the lithium-ion battery during cycling and improving the high-temperature storage performance and long-term cycling performance of the lithium-ion battery.

In some embodiments, the electrolyte further includes a second additive, where the second additive may include an active antioxidant, and the active antioxidant may include at least one of a polyphenol antioxidant, a flavonoid antioxidant, or a carotenoid antioxidant.

Without being limited by any theory or explanation, when the electrolyte further includes the second additive with an antioxidation effect, the second additive acts on active oxygen at a positive electrode active substance interface, improving the stability of the positive electrode active material. When the second additive acts together with the first additive on the positive electrode active material, the dissolution of transition metal from the positive electrode active material under high-temperature and high-voltage conditions is effectively suppressed, and the continuous decomposition of the electrolyte and the occurrence of side reactions are suppressed, thereby further improving the high-temperature cycling performance of the lithium-ion battery.

In some embodiments, the electrolyte further includes a third additive, where the third additive may include a compound represented by formula III-A:

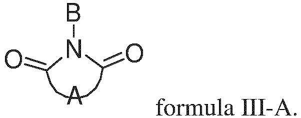

In formula III-A, A is selected from a substituted or unsubstituted C₁-C₆ alkylene group, a substituted or unsubstituted C₂-C₆ alkenylene group, a substituted or unsubstituted C₁-C₅ heteroatom-containing alkylene group, or a substituted or unsubstituted C₂-C₁₀ heteroatom-containing alkenylene group, and B is selected from hydrogen, a substituted or unsubstituted C₁-C₆ alkyl group, or a substituted or unsubstituted C₂-C₆ alkenyl group; when substituted, a substituent group is selected from at least one of halogen, an amino group, or a cyano group; and the heteroatom is selected from at least one of S or N.

Without being limited by any theory or explanation, when the electrolyte further includes the third additive, the third additive participates in a formation process of the solid electrolyte films at the positive and negative electrode interfaces during formation of the battery, further improving the electrochemical stability of the interfaces. In addition, the inventors have unexpectedly found that the solid electrolyte films jointly formed by the third additive and the first additive have lower ionic resistance, which is conducive to reducing side reactions at the electrode interfaces. Therefore, the direct-current resistance of the battery is reduced, and the high-temperature cycling performance is improved.

In some embodiments, the third additive includes at least one of compounds represented by formula III-1 to formula III-6:

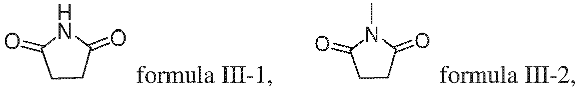

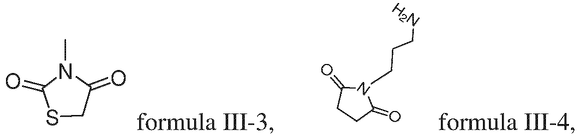

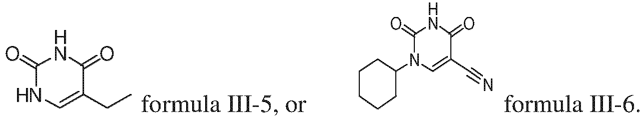

In some embodiments, the electrolyte further includes a fourth additive, where the fourth additive may include a compound represented by formula IV-A:

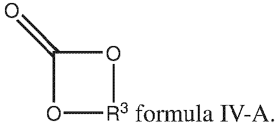

R³ is selected from a substituted or unsubstituted C₁-C₆ alkylene group or a substituted or unsubstituted C₂-C₆ alkenylene group, and when substituted, a substituent group is selected from halogen, a C₁-C₆ alkyl group, or a C₂-C₆ alkenyl group.

Without being limited by any theory or explanation, the above fourth additive can further improve the stability and flexibility of an interface film, thereby enhancing the protection for an electrode active material, reducing the probability of contact between the electrode active material and the electrolyte, and thus alleviating the increase in battery resistance caused by the accumulation of by-products during cycling. Thus, the cycling performance and high-temperature storage performance of the battery can be further improved.

In some embodiments, the fourth additive is selected from at least one of compounds represented by formula IV-1 to formula IV-12:

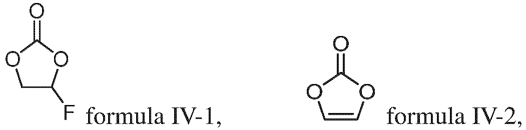

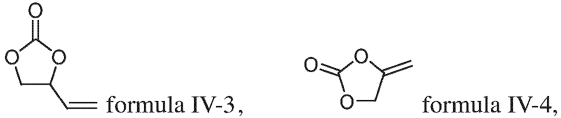

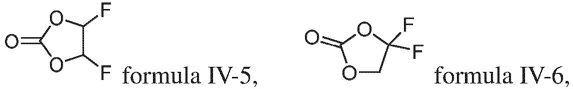

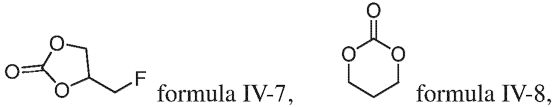

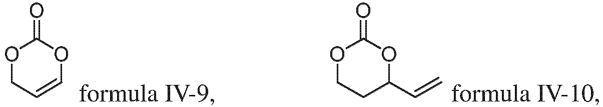

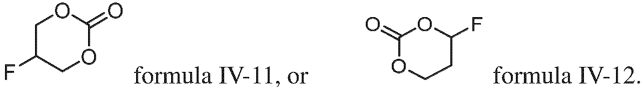

Without being limited by any theory or explanation, the fourth additive of the above type can further improve the stability and flexibility of the interface film, thereby enhancing the protection for the electrode active material, reducing the probability of contact between the electrode active material and the electrolyte, and thus alleviating the increase in battery resistance caused by the accumulation of by-products during cycling. Thus, the cycling performance and high-temperature storage performance of the battery can be further improved.

In some embodiments, based on a total mass of the electrolyte, a mass percentage of the compound represented by formula I-A is 0.01% to 5%, optionally 0.1% to 3.5%.

In some embodiments, based on the total mass of the electrolyte, a mass percentage of the compound represented by formula II-A is 0.01% to 5%, optionally 0.1% to 3.5%.

In some embodiments, based on the total mass of the electrolyte, a sum of mass percentages of the compound represented by formula I-A and the compound represented by formula II-A is 0.1% to 5%, optionally 0.5% to 4%.

In some embodiments, based on the total mass of the electrolyte, a mass percentage of the second additive is 0.01% to 1%, optionally 0.05% to 0.5%.

In some embodiments, based on the total mass of the electrolyte, a mass percentage of the third additive is 0.01% to 2%, optionally 0.1% to 1%.

In some embodiments, based on the total mass of the electrolyte, a mass percentage of the fourth additive is 0.01% to 2%, optionally 0.1% to 1.5%.

In some embodiments, based on the total mass of the electrolyte, the mass percentage M% of the fourth additive and the mass percentage X% of the first additive satisfy: 0.3≤X/M≤25.

Without being limited by any theory or explanation, in the electrolyte, the percentages of the additives satisfying the above conditions can further improve the cycling performance and high-temperature storage performance of the battery.

In some embodiments, the electrolyte further includes a fifth additive, where the fifth additive may include a compound represented by formula V-A:

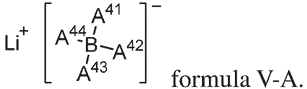

In formula V-A, A⁴¹, A⁴², A⁴³, and A⁴⁴ are each independently selected from halogen or structures represented by formula V-B, formula V-C, or formula V-D:

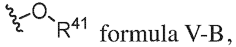

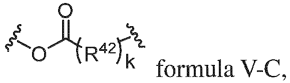

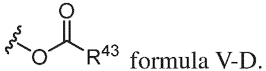

In formula V-B and formula V-D, R⁴¹ and R⁴³ are each independently selected from a substituted or unsubstituted C₁-C₆ alkyl group, or a substituted or unsubstituted C₂-C₆ alkenyl group, and when substituted, a substituent group is halogen.

In formula V-C, k is 0 or 1, R⁴² is selected from a substituted or unsubstituted C₁-C₆ alkylene group or a substituted or unsubstituted C₂-C₆ alkenylene group, and when substituted, a substituent group is halogen.

In formula V-C, atom O is connected to atom B, and atom C is connected to atom C of another substituent group.

Without being limited by any theory or explanation, when the electrolyte further includes a fifth additive, the fifth additive can also participate in the formation of the interface film on the surface of the positive electrode plate and/or the surface of the negative electrode plate, thereby further enhancing the protection for the electrode interfaces. Thus, the cycling performance and high-temperature storage performance of the lithium-ion battery can be further improved.

In some embodiments, the fifth additive includes at least one of lithium tetrafluoroborate LiBF₄, lithium bis(oxalate) borate LiBOB, or lithium difluoro(oxalato)borate LiDFOB.

In some embodiments, based on the total mass of the electrolyte, a mass percentage of the fifth additive is 0.01% to 2.5%, optionally 0.1% to 1%. Optionally, a ratio X/Y of the mass percentage Y% of the fifth additive to the mass percentage X% of the first additive satisfies: 0.5≤X/Y≤25. The percentage of the fifth additive in the electrolyte falling within the above appropriate range can further improve the cycling performance and high-temperature storage performance of the battery.

In some embodiments, the electrolyte further includes a sixth additive, where the sixth additive includes a compound represented by formula VI-A:

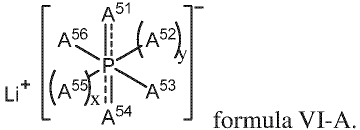

In formula VI-A, 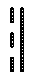 represents a single bond or a double bond, x and y are each independently 0 or 1, A⁵¹ and A⁵⁴ are each independently selected from an oxygen atom, halogen, a substituted or unsubstituted C₁-C₆ alkyl group, or structures represented by formula VI-B, formula VI-C, or formula VI-D, and when substituted, a substituent group is halogen. A⁵², A⁵³, A⁵⁵, and A⁵⁶ are each independently selected from halogen, a substituted or unsubstituted C₁-C₆ alkyl group, or structures represented by formula VI-B, formula VI-C, or formula VI-D, where A⁵¹, A⁵², A⁵³, A⁵⁴, A⁵⁵, and A⁵⁶ are not all fluorine.

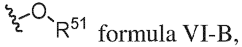

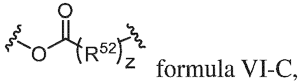

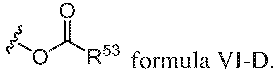

In formula VI-B and formula VI-D, R⁵¹ and R⁵³ are each independently selected from a substituted or unsubstituted C₁-C₆ alkyl group or a substituted or unsubstituted C₂-C₆ alkenyl group, and when substituted, a substituent group is halogen.

In formula VI-C, z is 0 or 1, atom O is connected to atom P, and atom C is connected to atom C of another substituent group. R⁵² is independently selected from a substituted or unsubstituted C₁-C₆ alkylene group or a substituted or unsubstituted C₂-C₆ alkenylene group; and when substituted, a substituent group is halogen.

Optionally, when one 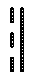 in formula VI-A represents a single bond, x+y=1.

When two 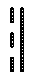 in formula VI-A each represent a single bond, x and y are each 1. When two 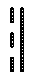 in formula VI-A each represent a double bond, x and y are each 0.

Without being limited by any theory or explanation, when the electrolyte further includes a sixth additive, the sixth additive can also participate in the formation of the interface film on the surface of the positive electrode plate and/or the surface of the negative electrode plate, thereby further enhancing the protection for the electrode interfaces, suppressing the continuous decomposition of the electrolyte, and alleviating the increase in battery resistance. Thus, the high-temperature storage and cycling performance of the lithium-ion battery can be improved.

In some embodiments, the sixth additive includes at least one of lithium difluorophosphate LiPO₂F₂, lithium difluoro(dioxalato)phosphate LiDFOP, or lithium tetrafluoro oxalate phosphate LiTFOP.

In some embodiments, based on the total mass of the electrolyte, a mass percentage of the sixth additive is 0.01% to 1.5%, optionally 0.1% to 0.5%. Optionally, a ratio X/Z of the mass percentage Z% of the sixth additive to the mass percentage X% of the first additive satisfies: 1≤X/Z≤25. The percentage of the sixth additive in the electrolyte falling within the above appropriate range can further improve the cycling performance and high-temperature storage performance of the battery.

In some embodiments, the electrolyte further includes a seventh additive, where the seventh additive includes at least one of compounds represented by formula VII-A and formula VII-B:

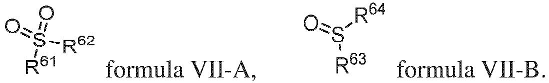

R⁶¹, R⁶², R⁶³, and R⁶⁴ are each independently selected from a substituted or unsubstituted C₁-C₅ alkyl group, a substituted or unsubstituted C₂-C₁₀ alkenyl group, a substituted or unsubstituted C₂-C₁₀ alkynyl group, a substituted or unsubstituted C₃-C₁₀ cycloalkyl group, a substituted or unsubstituted C₆-C₁₀ aryl group, or a substituted or unsubstituted C₁-C₆ heterocyclic group. When substituted, a substituent group is a halogen atom or one or more selected from heteroatom-containing functional groups. Optionally, R⁶¹ and R⁶² can form a closed ring structure, and R⁶³ and R⁶⁴ can form a closed ring structure.

The heteroatom-containing functional group includes one or more selected from B, N, O, F, Si, P, and S, and the heterocyclic group includes an alicyclic heterocyclic group and an aromatic heterocyclic group.

Without being limited by any theory or explanation, the above seventh additive has a strong antioxidation capability and can protect the stability of the positive electrode interface. In addition, the seventh additive can also be reduced on the surface of the negative electrode plate, thereby forming a protective film to suppress the decomposition of the electrolyte. Thus, the stability of the electrode interface can be further improved, thereby improving the cycling performance and high-temperature storage performance of the electrochemical apparatus.

In some embodiments, the seventh additive is selected from at least one of compounds represented by formula VII-1 to formula VII-43: 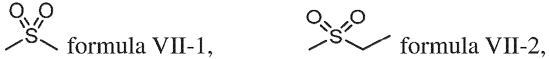 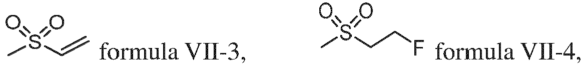 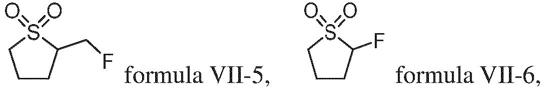 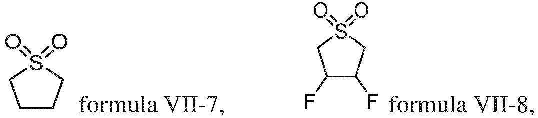 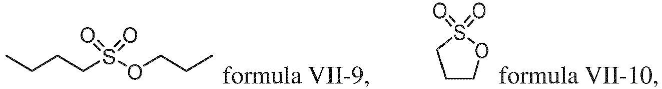 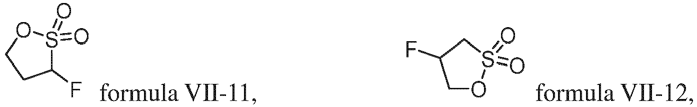 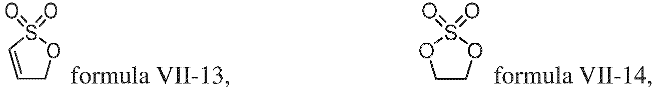 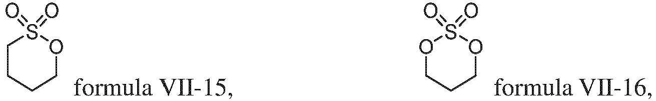 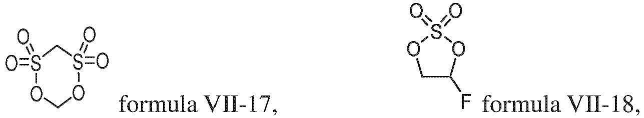 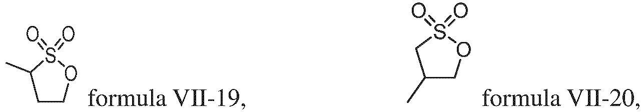 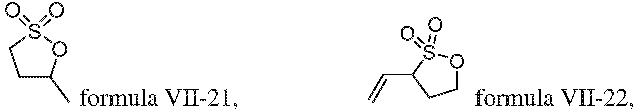 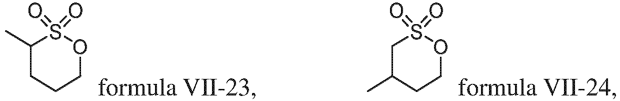 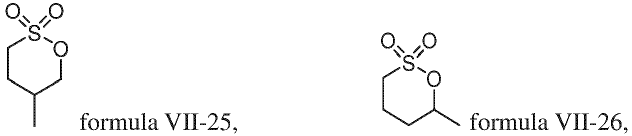 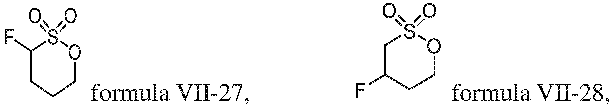 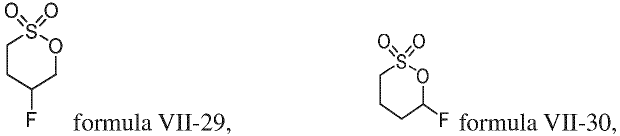 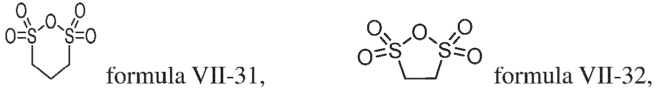 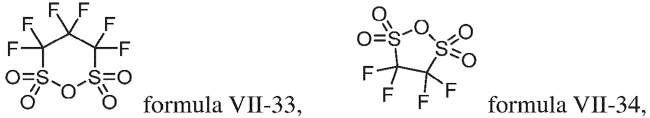 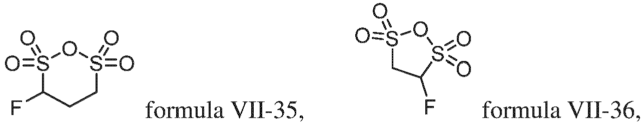 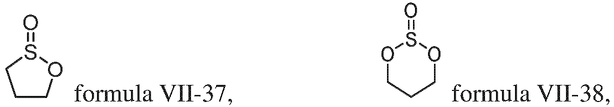 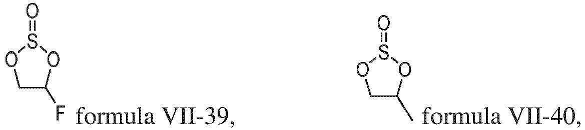 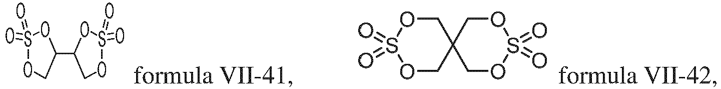 or

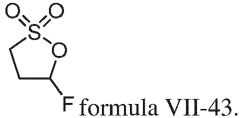

In some embodiments, the seventh additive is selected from at least one of 1,3-propane sultone PS, 1,4-butane sultone BS, methylene methanedisulfonate MMDS, 1,3-propane disulfonic anhydride, vinyl sulfate, vinyl sulfite, 4-methyl vinyl sulfate, 2,4-butane sultone, 2-methyl-1,3-propane sultone, 1,3-butane sultone, 1-fluoro-1,3-propane sultone, 2-fluoro-1,3-propane sultone, 3-fluoro-1,3-propane sultone, allyl-1,3-sultone, propylene sulfate, propylene sulfite, or fluoroethylene sulfate.

In some embodiments, based on the total mass of the electrolyte, a mass percentage of the seventh additive is 0.01% to 10%, optionally 0.5% to 4.5%. Optionally, a ratio X/W of the mass percentage W of the sixth additive to the mass percentage X of the first additive satisfies: 0.1≤X/W≤5. The percentage of the seventh additive in the electrolyte falling within the above appropriate range can further improve the cycling performance and high-temperature storage performance of the battery.

The electrolyte of this application may further include an electrolytic salt. The electrolytic salt may be a well-known electrolytic salt in the art. For the lithium-ion battery, the electrolytic salt may be a lithium salt.

In some embodiments, the lithium salt includes or is selected from at least one of an organic lithium salt or an inorganic lithium salt.

In some embodiments, the lithium salt includes or is selected from at least one of lithium hexafluorophosphate (LiPF₆), lithium hexafluoroantimonate (LiSbF₆), lithium hexafluoroarsenate (LiAsF₆), lithium perfluorobutanesulfonate (LiC₄F₉SO₃), lithium perchlorate (LiClO₄), lithium aluminate (LiAlO₂), lithium tetrachloroaluminate (LiAlCl₄), lithium bis(fluorosulfonyl)imide (LiN(CₓF₂ₓ₊₁SO₂)(C_{y}F_{2y+1}SO₂), where x and y are natural numbers), lithium chloride (LiCl), or lithium fluoride (LiF). In some embodiments, a mass percentage of the lithium salt in the electrolyte of this application is 10wt% to 15wt%. For example, the mass percentage of the lithium salt in the electrolyte may be 10%, 11%, 12%, 13%, 14%, or 15%, or falls within a range defined by any of the foregoing values.

The electrolyte of this application may further include a non-aqueous organic solvent. In some embodiments, the non-aqueous organic solvent includes at least one of carbonate, carboxylate, an ether compound, a sulfone compound, or another aprotic solvent. In some embodiments, a mass percentage of the non-aqueous organic solvent is 21% to 90%. For example, the mass percentage of the non-aqueous organic solvent may be 21%, 30%, 40%, 50%, 60%, 70%, 80%, or 90%, or falls within a range defined by any of the foregoing values.

In some embodiments, the carbonate solvent includes at least one of dimethyl carbonate, diethyl carbonate, ethyl methyl carbonate, methyl propyl carbonate, ethyl propyl carbonate, dipropyl carbonate, ethylene carbonate, propylene carbonate, butylene carbonate, or bis(2,2,2-trifluoroethyl) carbonate.

In some embodiments, the carboxylate solvent includes at least one of methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, valerolactone, or butyrolactone.

In some embodiments, the ether compound solvent includes at least one of ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, 1,3-dioxane, or 1,4-dioxane.

In some embodiments, the sulfone compound includes at least one of ethyl vinyl sulfone, methyl isopropyl sulfone, isopropyl sec-butyl sulfone, or sulfolane.

The non-aqueous organic solvent in the electrolyte may be a single non-aqueous organic solvent or a mixture of a plurality of non-aqueous organic solvents. When a mixed solvent is used, a mixing ratio can be controlled according to the desired performance of the electrochemical apparatus.

The material, composition, and preparation method of the positive electrode plate used in the lithium-ion battery of this application may include any well-known technology in the prior art.

The positive electrode plate includes a positive electrode current collector and a positive electrode active substance layer, where the positive electrode active substance layer is provided on at least one surface of the positive electrode current collector and includes a positive electrode active material. For example, the positive electrode current collector includes two opposite surfaces in its thickness direction, and the positive electrode active substance layer is provided on either or both of the two opposite surfaces of the positive electrode current collector.

In some embodiments, the positive electrode active substance layer includes a positive electrode active material. The positive electrode active material is not limited to a specific type and may be selected based on needs. For example, the positive electrode active material may include one or more selected from lithium transition metal oxide, olivine-structured lithium-containing phosphate, and respective modified compounds thereof. In the electrochemical apparatus of this application, the modified compounds of the positive electrode active materials may be obtained through doping modification, surface coating modification, or both doping modification and surface coating modification to the positive electrode active materials.

For example, the lithium transition metal oxide may include one or more selected from lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. For example, the olivine-structured lithium-containing phosphate may include one or more selected from lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof. One type of these positive electrode active materials may be used alone, or two or more types may be used in combination.

In some embodiments, the positive electrode active substance layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode active substance layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylic resin.

In some embodiments, the positive electrode current collector may be a metal foil or a composite current collector. For example, an aluminum foil may be used as the metal foil for the positive electrode current collector. The composite current collector may include a polymer material matrix and a metal material layer formed on at least one surface of the polymer material matrix. For example, the metal material may be one or more selected from copper, copper alloy, nickel, nickel alloy, titanium, titanium alloy, silver, and silver alloy. For example, the polymer material matrix may be selected from polypropylene, polyethylene terephthalate, polybutylene terephthalate, polystyrene, polyethylene, or the like.

The positive electrode plate of this application may be prepared using a conventional method in the art. For example, the positive electrode active substance layer is typically formed by applying a positive electrode slurry on the positive electrode current collector, followed by drying and cold pressing. The positive electrode slurry is typically formed by dispersing the positive electrode active material, a selectable conductive agent, a selectable binder, and any other constituents into a solvent and stirring them to uniformity. The solvent may be N-methylpyrrolidone (NMP), but is not limited thereto.

The positive electrode plate of this application does not exclude additional functional layers other than the positive electrode active substance layer. For example, in some embodiments, the positive electrode plate of this application further includes a conductive primer layer (for example, consisting of a conductive agent and a binder) sandwiched between the positive electrode current collector and the positive electrode active substance layer and disposed on the surface of the positive electrode current collector. In some other embodiments, the positive electrode plate of this application further includes a protection layer covering the surface of the positive electrode active substance layer.

The material, composition, and preparation method of the negative electrode plate used in the lithium-ion battery of this application may include any well-known technology in the prior art.

The negative electrode plate may be a lithium metal plate or may include a negative electrode current collector and an electrode plate of a negative electrode film layer disposed on at least one surface of the negative electrode current collector. The negative electrode film layer typically includes a negative electrode active material and a selectable conductive agent, binder, and thickener.

The negative electrode active material is not limited to a specific type and may be selected based on needs. For example, the negative electrode active material includes but is not limited to at least one of natural graphite, artificial graphite, mesocarbon microbeads (MCMB), hard carbon, soft carbon, silicon, silicon-carbon composite, SiO, Li-Sn alloy, Li-Sn-O alloy, Sn, SnO, SnO₂, spinel-structured Li₄Ti₅O₁₂, or Li-Al alloy.

The conductive agent is not limited to a specific type and may be selected based on needs. For example, the conductive agent may include but is not limited to at least one of conductive graphite, superconducting carbon, acetylene black, carbon black, Ketjen black, carbon dots, carbon nanotubes, graphene, or carbon nanofiber.

The binder is not limited to a specific type and may be selected based on needs. For example, the binder includes but is not limited to at least one of styrene-butadiene rubber (SBR), polyvinylidene fluoride (PVDF), polytetrafluoroethylene (PTFE), polyvinyl butyral (PVB), water-based acrylic resin (water-based acrylic resin), or carboxymethyl cellulose.

The thickener is not limited to a specific type and may be selected based on needs. For example, the thickener includes but is not limited to sodium carboxymethyl cellulose (CMC-Na).

However, this application is not limited to these materials. The negative electrode plate of this application may be further made of other materials that can be used as negative electrode active materials, conductive agents, binders, and thickeners. In some embodiments, the negative electrode current collector includes two opposite surfaces in its thickness direction, and the negative electrode film layer is provided on either or both of the two opposite surfaces of the negative electrode current collector.

The negative electrode current collector may be a metal foil or a porous metal plate, for example, a foil or porous plate made of metal such as copper, nickel, titanium, or iron, or alloys thereof. For example, the negative electrode current collector may be a copper foil.

The negative electrode plate may be prepared using a conventional method in the art. Typically, the negative electrode active material and the selectable conductive agent, binder, and thickener are dispersed in a solvent to form a uniform negative electrode slurry, where the solvent may be N-methylpyrrolidone (NMP) or deionized water. The negative electrode slurry is applied to the negative electrode current collector, and then processes such as drying and cold pressing are performed to obtain a negative electrode plate.

The negative electrode plate of this application does not exclude additional functional layers other than the negative electrode film layer. For example, in some embodiments, the negative electrode plate of this application may further include a conductive primer layer (for example, consisting of a conductive agent and a binder) sandwiched between the negative electrode current collector and the negative electrode film layer and disposed on the surface of the negative electrode current collector. In some other embodiments, the negative electrode plate of this application further includes a protection layer covering the surface of the negative electrode film layer.

The lithium-ion battery of this application further includes a separator disposed between the positive electrode plate and the negative electrode plate. The separator is mainly used to prevent a short circuit between the positive electrode and the negative electrode and to allow the ions to pass through. The separator is not limited to any particular type in this application, and may be any well-known porous separator with good chemical stability and mechanical stability. The separator may be a single-layer film or a multi-layer composite film. When the separator is a multi-layer composite film, all layers may be made of same or different materials.

In some embodiments, the separator includes a polymer or an inorganic substance formed by a material stable to the electrolyte of this application.

For example, the separator may include a substrate layer and a selectable surface treatment layer. The substrate layer is a non-woven fabric, film, or composite film with a porous structure. A material of the substrate layer includes at least one of polyethylene, polypropylene, polyethylene terephthalate, or polyimide. For example, a polypropylene porous film, a polyethylene porous film, a polypropylene non-woven fabric, a polyethylene non-woven fabric, or a polypropylene-polyethylene-polypropylene porous composite film may be selected.

The surface of the substrate layer may or may not be provided with a surface treatment layer. In some embodiments, at least one surface of the substrate layer is provided with a surface treatment layer, and the surface treatment layer may be a polymer layer or an inorganic substance layer, or a layer formed by mixing a polymer and an inorganic substance.

The inorganic substance layer includes inorganic particles and a binder. The inorganic particles include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene.

The polymer layer includes a polymer, and a material of the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In some embodiments, the positive electrode plate, the negative electrode plate, and the separator may be made into an electrode assembly through winding or lamination.

The lithium-ion battery of this application further includes an outer package, where the outer package is used for packaging the electrode assembly and the electrolyte. In some embodiments, the outer package may be a hard shell, for example, a hard plastic shell, an aluminum shell, or a steel shell, or may be a soft pack, for example, a soft pouch. A material of the soft pack may be plastic, for example, at least one of polypropylene (PP), polybutylene terephthalate (PBT), polybutylene succinate (PBS), or the like.

### Electrochemical apparatus

As used in this application, an electrochemical apparatus includes any apparatus in which electrochemical reactions take place to convert chemical energy and electrical energy to each other. Specific examples of the electrochemical apparatus include all types of primary batteries or secondary batteries, for example, lithium-ion batteries.

Herein, according to a second aspect of this application, an electrochemical apparatus is provided, including one or more of the lithium-ion batteries according to the first aspect of this application. For example, the electrochemical apparatus mentioned in this application may be a battery module, a battery pack, or the like. The electrochemical apparatus typically includes a box configured to enclose one or more lithium-ion batteries. The box can prevent liquids or other foreign matter from affecting charging or discharging of the lithium-ion batteries.

In some embodiments, the lithium-ion battery in the electrochemical apparatus may be provided in plurality, and the plurality of lithium-ion batteries may be connected in series, parallel, or series-parallel, where being connected in series-parallel means a combination of series and parallel connections of the plurality of lithium-ion batteries. The plurality of lithium-ion batteries may be directly connected in series, parallel, or series-parallel, and then an entirety of the plurality of lithium-ion batteries is accommodated in the box; or certainly, the plurality of lithium-ion batteries may be connected in series, parallel, or series-parallel first to form a battery module and then a plurality of battery modules are connected in series, parallel, or series-parallel to form an entirety which is accommodated in the box.

### Electronic device

According to a third aspect of this application, an electronic device is provided, including the electrochemical apparatus according to the second aspect of this application.

The electronic device of this application is not particularly limited and may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a lithium-ion capacitor.

### Examples

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios reported in the following examples are based on mass, all reagents used in the examples are commercially available or synthesized in a conventional manner, and can be used directly without further treatment, and all instruments used in the examples are commercially available.

### Preparation of examples and comparative examples

### Examples 1-1 to 1-69

### Preparation of negative electrode plate

A negative electrode active substance graphite, a conductive agent acetylene black, a binder styrene-butadiene rubber (SBR), and a thickener sodium carboxymethyl cellulose (CMC-Na) were fully stirred and mixed in an appropriate amount of deionized water solvent at a weight ratio of 95:2:2:1, to form a uniform negative electrode slurry; and the slurry was applied on a negative electrode current collector Cu foil, followed by drying and cold pressing, to obtain a negative electrode.

### Preparation of positive electrode plate

A positive electrode active substance lithium cobalt oxide LiCoO₂, a conductive agent acetylene black, and a binder polyvinylidene fluoride (PVDF) were fully stirred and mixed in an appropriate amount of N-methylpyrrolidone (NMP) solvent at a weight ratio of 96:2:2, to form a uniform positive electrode slurry; and the slurry was applied on a positive electrode current collector Al foil, followed by drying and cold pressing, to obtain a positive electrode plate. Surface densities of the positive electrode active material layers in all examples were prepared with reference to the parameters in Table 1.

### Preparation of electrolyte

Ethylene carbonate (EC), ethyl methyl carbonate (EMC), and diethyl carbonate (DEC) were mixed at a volume ratio of 1:1:1 to obtain a base solvent; LiPF₆ was dissolved in the above base solvent; and then the first additive was added according to the type and percentage shown in Table 1, to obtain an electrolyte. Based on a mass of the electrolyte, a mass percentage of LiPF₆ was 14.4%.

### Preparation of separator

A porous polypropylene film (provided by Celgard) with a thickness of 14 µm was used as a separator.

### Preparation of lithium-ion secondary battery

The positive electrode plate, the separator, and the negative electrode plate were stacked in sequence and wound to obtain an electrode assembly. The electrode assembly was placed in an outer package, the foregoing electrolyte was added, and processes such as packaging, standing, formation, and shaping were performed to obtain a lithium-ion secondary battery.

### Comparative example 1

This comparative example differed from example 1-1 in that no first additive was added during preparation of the electrolyte.

### Examples 2-1 to 2-4

These examples differed from example 1-5 in that the second additive was added according to the type and percentage shown in Table 2 during preparation of the electrolyte.

### Comparative example 2

This comparative example differed from example 2-2 in that no second additive was added during preparation of the electrolyte.

### Examples 3-1 to 3-9

These examples differed from example 1-5 in that the second additive and the third additive were added according to the types and percentages shown in Table 3 during preparation of the electrolyte.

### Tests

### (1) High-temperature cycle test of lithium-ion battery at 45°C

The lithium-ion battery was placed in a 45°C thermostat and left standing for 30 minutes, so that the lithium-ion battery reached a constant temperature. At 45°C, the lithium-ion battery which had reached the constant temperature was charged to 4.5 V at a constant current of 0.2C, then charged to a current of 0.05C at a constant voltage of 4.5 V and left standing for 5 minutes, and then discharged to 3.0 V at a constant current of 0.2C and left standing for 5 minutes, and an initial capacity was tested. Then, the lithium-ion battery was charged to 4.15 V at a constant current of 1.3C and then charged to a current of 1C at a constant voltage of 4.15 V. Then, the lithium-ion battery was charged to 4.25 V at a constant current of 1C and then charged to a current of 0.8C at a constant voltage of 4.25 V. Then, the lithium-ion battery was charged to 4.5 V at a constant current of 0.8C and then charged to a current of 0.05C at a constant voltage of 4.5 V. Then, the lithium-ion battery was left standing for 5 minutes. Then, the lithium-ion battery was discharged to a voltage of 3.0 V at a constant current of 1C and then left standing for 5 minutes. This process was one charge and discharge cycle. Charge/discharge was performed in this way, and a capacity retention rate of the battery after 400 cycles was calculated.

Capacity retention rate P_{N}(%) of lithium-ion battery after N cycles=(discharge capacity of the N-th cycle/discharge capacity of the 1st cycle)×100%.

### (2). Hot box test of lithium-ion battery

At 25°C, the lithium-ion battery was charged to 4.5 V at a constant current of 0.7C and then charged to a current of 0.05C at a constant voltage of 4.5 V. The battery was placed in a high temperature box, heated to 135°C at a temperature rise velocity of 5±2°C/min, and then kept for 1 h; and the changes of the voltage and temperature of the battery and the hot box temperature were recorded. The battery was deemed to pass the test if the battery had no fire, no explosion, and no smoke. 10 batteries in each group were tested, and the number of batteries that passed the test was recorded.

### (3) Direct-current resistance DCR test of lithium-ion battery at 25°C

The lithium-ion battery was placed in a 25°C thermostat and left standing for 1 hour, so that the lithium-ion battery reached a constant temperature. Then, the lithium-ion battery was charged to 4.2 V at a constant current of 0.5C, then charged to 4.5 V at a constant current of 0.3C, charged to a current of 0.02C at a constant voltage of 4.5 V, and left standing for 30 minutes. Then, the lithium-ion battery was discharged to 3.4 V at a constant current of 0.1C and left standing for 30 minutes. A capacity in this step was used as a reference. At 0°C, the lithium-ion battery was charged to 4.2 V at a constant current of 0.5C, then charged to 4.5 V at a constant current of 0.3C, charged to a current of 0.02C at a constant voltage of 4.5 V, and left standing for 30 minutes. Then, the lithium-ion battery was discharged for 60 min at a constant current of 0.1C (calculation was performed using an actual capacity obtained in the previous step), and the voltage at this time was recorded as V₁. Then, the lithium-ion battery was discharged for 1s at a constant current of 1C (a capacity was calculated using a capacity marked on a battery cell), a voltage at this time was recorded as V₂, and direct-current resistance R corresponding to a 20% SOC state of the battery cell was calculated.

Test results of examples 1-1 to 1-69 and comparative example 1 were shown in Table 1.

**Table 1**

| | Polynitrile additive and positive electrode coating weight | | | | Energy density (Wh/L) | Cycling performance at 45°C (400 cycles) | Hotbox performance at 135°C for 60 min |
|---|---|---|---|---|---|---|---|
| | First additive | | Positive electrode coating weight (C/(mg/mm²)) | Cₚₒₛᵢₜᵢᵥₑ/X | | | |
| | Type | Percentage (X%) | | | | | |
| Example 1-1 | I-1 | 0.01 | 0.15 | 15 | 714 | 65.21 % | 0/10Pass |
| Example 1-2 | | 0.05 | 0.15 | 3 | 714 | 67.45% | 0/10Pass |
| Example 1-3 | | 0.1 | 0.15 | 1.5 | 714 | 70.25% | 2/10Pass |
| Example 1-4 | | 0.5 | 0.15 | 0.3 | 714 | 78.35% | 10/10Pass |
| Example 1-5 | | 1 | 0.15 | 0.15 | 714 | 77.25% | 10/10Pass |
| Example 1-6 | | 1.5 | 0.15 | 0.1 | 714 | 77.18% | 10/10Pass |
| Example 1-7 | | 3 | 0.15 | 0.05 | 714 | 76.89% | 10/10Pass |
| Example 1-8 | | 3.5 | 0.15 | 0.04 | 714 | 64.57% | 10/10Pass |
| Example 1-9 | I-4 | 0.06 | 0.15 | 2.5 | 714 | 68.26% | 0/10Pass |
| Example 1-10 | | 0.15 | 0.15 | 1 | 714 | 71.35% | 2/10Pass |
| Example 1-11 | | 0.3 | 0.15 | 0.5 | 714 | 77.67% | 8/10Pass |
| Example 1-12 | | 1 | 0.15 | 0.15 | 714 | 76.78% | 10/10Pass |
| Example 1-13 | I-7 | 0.05 | 0.15 | 3 | 714 | 67.85% | 0/10Pass |
| Example 1-14 | | 0.2 | 0.15 | 0.75 | 714 | 72.56% | 5/10Pass |
| Example 1-15 | | 0.5 | 0.15 | 0.3 | 714 | 79.15% | 10/10Pass |
| Example 1-16 | | 1.5 | 0.15 | 0.1 | 714 | 77.95% | 10/10Pass |
| Example 1-17 | I-9 | 0.05 | 0.15 | 3 | 714 | 68.17% | 0/10Pass |
| Example 1-18 | | 0.3 | 0.15 | 0.5 | 714 | 78.25% | 8/10Pass |
| Example 1-19 | | 1 | 0.15 | 0.15 | 714 | 76.85% | 10/10Pass |
| Example 1-20 | I-10 | 0.01 | 0.15 | 15 | 714 | 65.18% | 0/10Pass |
| Example 1-21 | | 0.2 | 0.15 | 0.75 | 714 | 71.98% | 5/10Pass |
| Example 1-22 | | 0.5 | 0.15 | 0.3 | 714 | 78.97% | 10/10Pass |
| Example 1-23 | | 1 | 0.15 | 0.15 | 714 | 77.26% | 10/10Pass |
| Example 1-24 | I-11 | 0.05 | 0.15 | 3 | 714 | 69.05% | 0/10Pass |
| Example 1-25 | | 0.3 | 0.15 | 0.5 | 714 | 78.65% | 8/10Pass |
| Example 1-26 | | 0.7 | 0.15 | 0.21 | 714 | 78.15% | 10/10Pass |
| Example 1-27 | I-14 | 0.05 | 0.15 | 3 | 714 | 68.79% | 0/10Pass |
| Example 1-28 | | 0.5 | 0.15 | 0.3 | 714 | 79.24% | 10/10Pass |
| Example 1-29 | | 1 | 0.15 | 0.15 | 714 | 77.85% | 10/10Pass |
| Example 1-30 | I-17 | 0.01 | 0.15 | 15 | 714 | 65.24% | 0/10Pass |
| Example 1-31 | | 0.5 | 0.15 | 0.3 | 714 | 79.43% | 10/10Pass |
| Example 1-32 | | 1 | 0.15 | 0.15 | 714 | 77.92% | 10/10Pass |
| Example 1-33 | II-1 | 0.01 | 0.15 | 15 | 714 | 65.22% | 0/10Pass |
| Example 1-34 | | 0.05 | 0.15 | 3 | 714 | 69.57% | 1/10Pass |
| Example 1-35 | | 0.3 | 0.15 | 0.5 | 714 | 79.25% | 8/10Pass |
| Example 1-36 | | 0.5 | 0.15 | 0.3 | 714 | 83.43% | 10/10Pass |
| Example 1-37 | | 1 | 0.15 | 0.15 | 714 | 82.86% | 8/10Pass |
| Example 1-38 | | 1.5 | 0.15 | 0.1 | 714 | 80.76% | 10/10Pass |
| Example 1-39 | | 2 | 0.15 | 0.075 | 714 | 80.32% | 10/10Pass |
| Example 1-40 | | 2.5 | 0.15 | 0.06 | 714 | 75.87% | 10/10Pass |
| Example 1-41 | II-4 | 0.05 | 0.15 | 3 | 714 | 68.75% | 1/10Pass |
| Example 1-42 | | 0.1 | 0.15 | 1.5 | 714 | 75.67% | 3/10Pass |
| Example 1-43 | | 0.5 | 0.15 | 0.3 | 714 | 82.87% | 10/10Pass |
| Example 1-44 | | 1 | 0.15 | 0.15 | 714 | 81.56% | 10/10Pass |
| Example 1-45 | II-16 | 0.05 | 0.15 | 3 | 714 | 68.87% | 1/10Pass |
| Example 1-46 | | 0.5 | 0.15 | 0.3 | 714 | 83.78% | 10/10Pass |
| Example 1-47 | | 1 | 0.15 | 0.15 | 714 | 81.96% | 10/10Pass |
| Example 1-48 | II-9 | 0.2 | 0.15 | 0.75 | 714 | 78.97% | 4/10Pass |
| Example 1-49 | | 0.5 | 0.15 | 0.3 | 714 | 83.52% | 10/10Pass |
| Example 1-50 | | 1 | 0.15 | 0.15 | 714 | 82.07% | 10/10Pass |
| Example 1-51 | | 1.5 | 0.15 | 0.1 | 714 | 81.23% | 10/10Pass |
| Example 1-52 | II-12 | 0.05 | 0.15 | 3 | 714 | 68.97% | 1/10Pass |
| Example 1-53 | | 0.5 | 0.15 | 0.3 | 714 | 83.68% | 10/10Pass |
| Example 1-54 | | 1 | 0.15 | 0.15 | 714 | 81.85% | 10/10Pass |
| Example 1-55 | II-13 | 0.07 | 0.15 | 2.14 | 714 | 69.87% | 1/10Pass |
| Example 1-56 | | 0.5 | 0.15 | 0.3 | 714 | 83.52% | 10/10Pass |
| Example 1-57 | | 1.2 | 0.15 | 0.13 | 714 | 80.96% | 10/10Pass |
| Example 1-58 | II-18 | 0.05 | 0.15 | 3 | 714 | 68.89% | 1/10Pass |
| Example 1-59 | | 0.5 | 0.15 | 0.3 | 714 | 83.39% | 10/10Pass |
| Example 1-60 | | 1 | 0.15 | 0.15 | 714 | 82.56% | 10/10Pass |
| Example 1-61 | | 1.5 | 0.15 | 0.1 | 714 | 80.65% | 10/10Pass |
| Example 1-62 | I-1 | 0.5 | 0.05 | 0.1 | 470 | 79.85% | 10/10Pass |
| Example 1-63 | I-1 | 0.5 | 0.1 | 0.2 | 632 | 78.55% | 10/10Pass |
| Example 1-64 | I-1 | 0.5 | 0.15 | 0.3 | 714 | 78.35% | 10/10Pass |
| Example 1-65 | I-1 | 0.5 | 0.2 | 0.4 | 763 | 78.27% | 10/10Pass |
| Example 1-66 | I-1 | 0.5 | 0.25 | 0.5 | 797 | 78.20% | 10/10Pass |
| Example 1-67 | I-1 | 0.5 | 0.3 | 0.6 | 820 | 77.27% | 10/10Pass |
| Example 1-68 | I-1 | 0.5 | 0.35 | 0.7 | 838 | 77.05% | 10/10Pass |
| Example 1-69 | I-1 | 0.5 | 0.4 | 0.8 | 852 | 68.92% | 5/10Pass |
| Comparative example 1 | / | / | 0.15 | / | 714 | 65.20% | 0/10Pass |

With reference to test results in Table 1, it can be seen that in examples 1-1 to 1-69, these embodiments in which the electrolyte includes the first additive of this application and Cₚₒₛᵢₜᵢᵥₑ/X falls within the range defined by this application have higher energy density, higher cycling capacity retention rate at 45°C, and higher hot box test pass rate compared to other examples and comparative example 1. It can be seen that when the electrolyte includes the first additive of this application and Cₚₒₛᵢₜᵢᵥₑ/X falls within the range defined by this application, the energy density and high-temperature cycling performance of the lithium-ion battery can be significantly improved, and the safety performance of the lithium-ion battery under high-temperature conditions can also be significantly improved.

**Table 2**

| | Second additive | | High-temperature cycle test at 45°C | Hot box test |
|---|---|---|---|---|
| | Type | Percentage (%) | | |
| Comparative example 2 | Procyanidine | 0.5 | 69.85% | 0/10 Pass |
| Example 1-5 | / | / | 77.25% | 10/10 Pass |
| Example 2-1 | Procyanidine | 0.1 | 78.31% | 10/10 Pass |
| Example 2-2 | Procyanidine | 0.5 | 80.38% | 10/10 Pass |
| Example 2-3 | Procyanidine | 1 | 79.87% | 10/10 Pass |
| Example 2-4 | Alpha-carotene | 0.5 | 79.52% | 10/10 Pass |

With reference to test results in Table 2, it can be seen that when the electrolyte of the lithium-ion battery additionally includes the second additive of this application, the high-temperature cycling performance and safety performance of the lithium-ion battery under high-temperature conditions can be further improved.

**Table 3**

| | Percentage of second additive (%) | | Percentage of third additive (%) | | High-temperature cycle test at 45°C | Hot box test | Direct-current resistance |
|---|---|---|---|---|---|---|---|
| Example 1-5 | / | / | / | / | 77.25% | 10/10 Pass | 37.1 |
| Example 3-1 | / | / | III-2 | 0.1 | 77.56% | 10/10 Pass | 35.6 |
| Example 3-2 | / | / | III-2 | 0.2 | 78.85% | 10/10 Pass | 32.8 |
| Example 3-3 | / | / | III-2 | 0.5 | 80.31% | 10/10 Pass | 29.1 |
| Example 3-4 | / | / | III-2 | 1 | 81.59% | 10/10 Pass | 24.1 |
| Example 3-5 | / | / | III-2 | 2 | 79.37% | 8/10 Pass | 34.5 |
| Example 3-6 | / | / | III-3 | 1 | 80.14% | 10/10 Pass | 25.9 |
| Example 3-7 | / | / | III-5 | 1 | 79.87% | 10/10 Pass | 26.3 |
| Example 3-8 | Procyanidine | 0.5 | III-2 | 1 | 86% | 10/10 Pass | 26.5 |
| Example 3-9 | Procyanidine | 1 | 111-3 | 1 | 84% | 10/10 Pass | 27.7 |

With reference to test results in Table 3, it can be seen that when the electrolyte of the lithium-ion battery includes the third additive, the direct-current resistance of the lithium-ion battery can be significantly reduced, thereby improving the high-temperature cycling performance of the lithium-ion battery. Furthermore, when the electrolyte of the lithium-ion battery includes both an appropriate amount of the second additive and third additive, the high-temperature cycling performance of the lithium-ion battery can be significantly improved, thereby allowing the lithium-ion battery to have high safety performance under high-temperature conditions.

The foregoing descriptions are merely specific embodiments of this application, but are not intended to limit the protection scope of this application. Any equivalent modifications or replacements readily figured out by persons skilled in the art within the technical scope disclosed in this application shall fall within the protection scope of this application. Therefore, the protection scope of this application shall be subject to the protection scope of the claims.

## Claims

1. A lithium-ion battery, comprising a positive electrode plate, a negative electrode plate, a separator, and an electrolyte, wherein the electrolyte comprises a first additive, and the first additive comprises at least one of a compound represented by formula I-A or a compound represented by formula II-A: 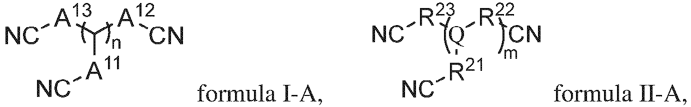
wherein in formula I-A, n is a positive integer from 1 to 8, A¹¹, A¹², and A¹³ are each independently selected from one of structures represented by formula I-A1 or formula I-A2, and at least two of A¹¹, A¹², and A¹³ are selected from structures represented by formula I-A2: 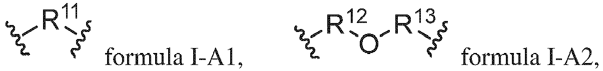
wherein R¹¹, R¹², and R¹³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen;
in formula II-A, m is 1 or 2, and Q is selected from structures represented by formula II-A1 or formula II-A2: 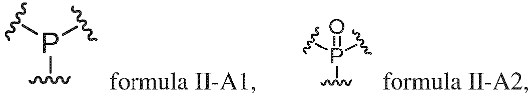
wherein R²¹, R²², and R²³ are each independently selected from a covalent single bond, a substituted or unsubstituted C₁-C₁₀ alkylene group, a substituted or unsubstituted C₂-C₁₀ alkenylene group, a substituted or unsubstituted C₂-C₁₀ alkynylene group, a substituted or unsubstituted C₆-C₁₀ arylene group, a substituted or unsubstituted C₃-C₁₀ cycloalkylene group, or a substituted or unsubstituted C₁-C₁₀ heterocyclene group, and when substituted, a substituent group is selected from halogen; and
the lithium-ion battery satisfies: 0.05≤Cₚₒₛᵢₜᵢᵥₑ/X≤1.5, wherein Cₚₒₛᵢₜᵢᵥₑ mg/mm² represents a surface density of a positive electrode active substance layer of the positive electrode plate, and X% represents a mass percentage of the first additive in the electrolyte.

2. The battery according to claim 1, wherein the battery satisfies at least one of the following (1) to (3):
(1) 0.084≤Cₚₒₛᵢₜᵢᵥₑ≤0.35, optionally 0.1≤Cₚₒₛᵢₜᵢᵥₑ≤0.26;
(2) a compacted density of the positive electrode active substance layer is 4.0 g/cm³ to 4.4 g/cm³; or
(3) a value range of X is 0.1 to 10.

3. The battery according to claim 1, wherein the compound represented by formula I-A comprises at least one of compounds represented by formula I-1 to formula I-17:

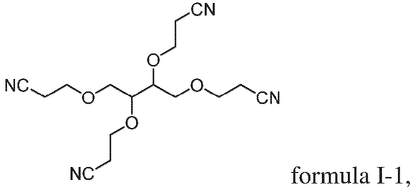

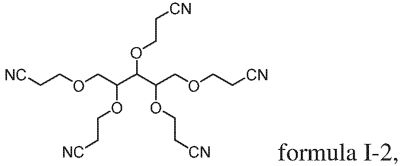

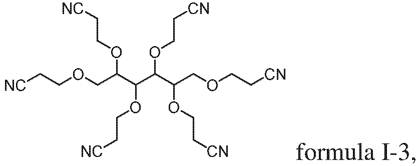

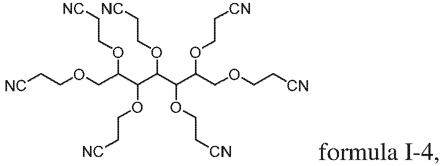

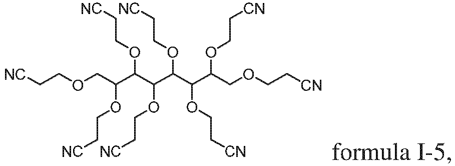

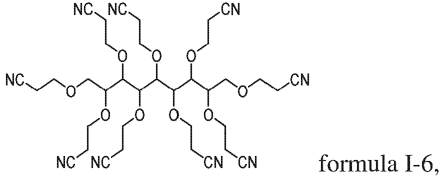

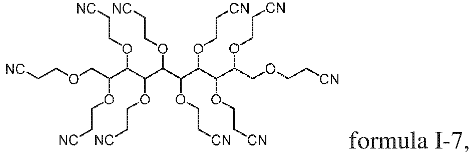

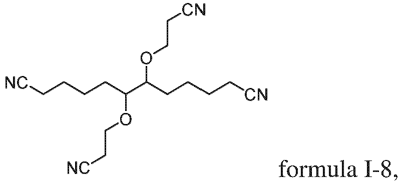

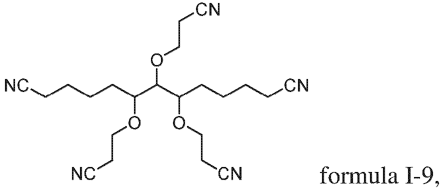

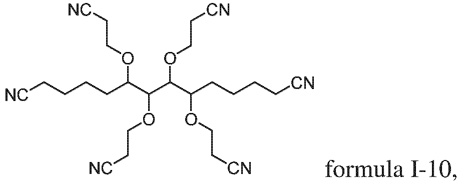

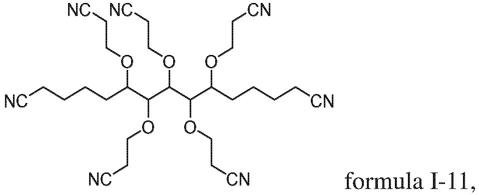

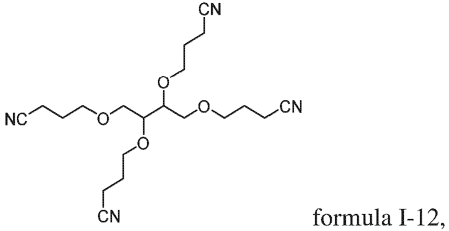

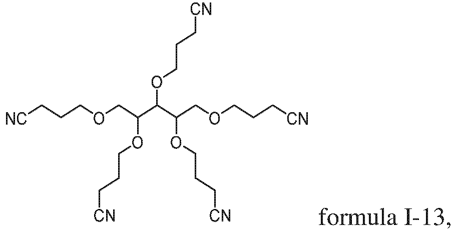

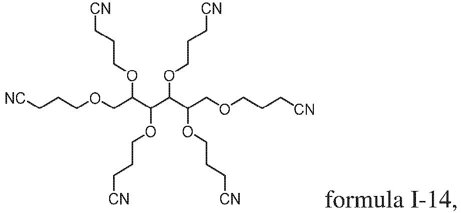

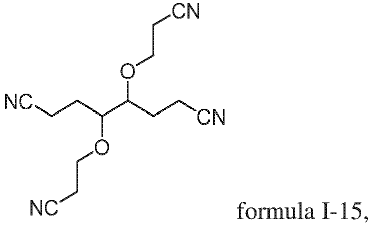

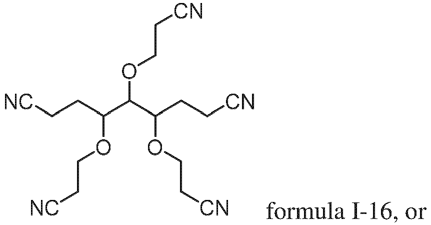

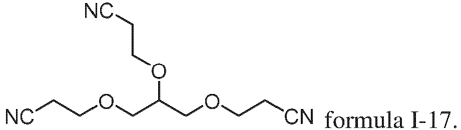

4. The battery according to claim 1, wherein the compound represented by formula II-A comprises at least one of compounds represented by formula II-1 to formula II-22:

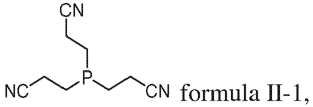

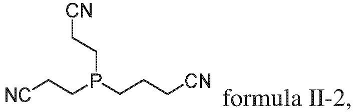

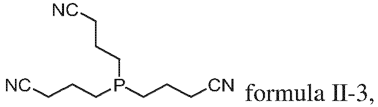

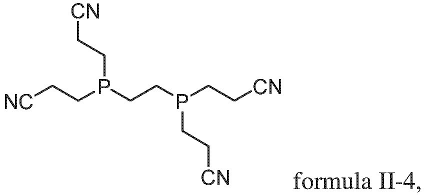

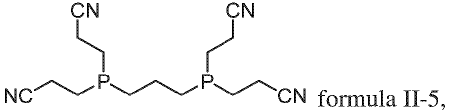

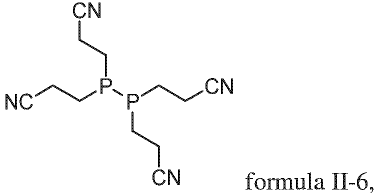

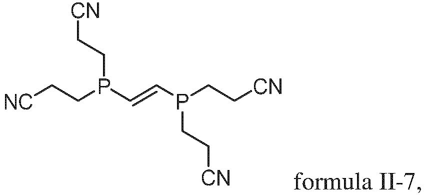

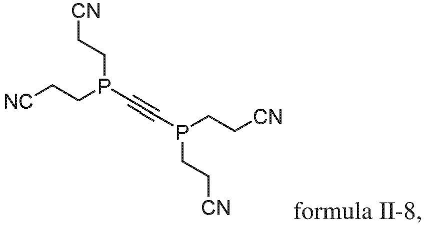

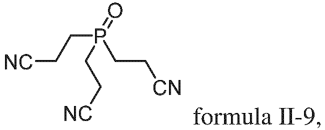

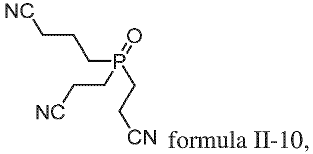

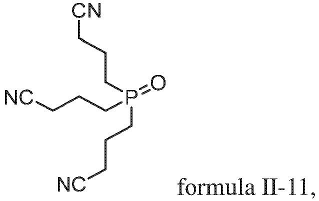

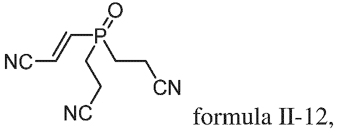

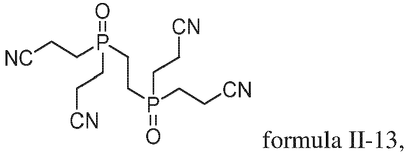

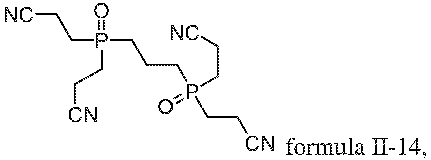

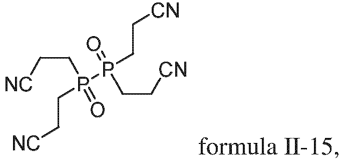

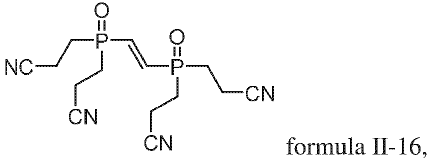

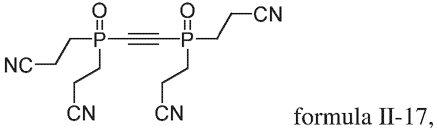

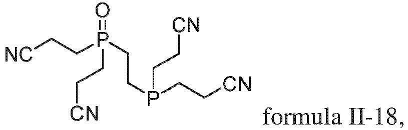

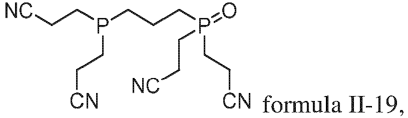

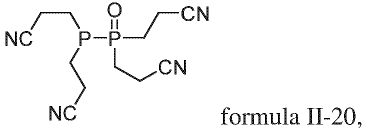

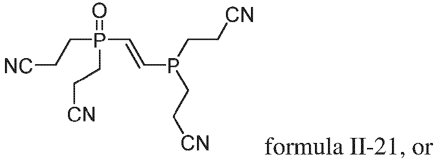

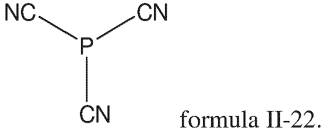

5. The battery according to claim 1, wherein the electrolyte further comprises a second additive, and the second additive comprises at least one of a polyphenol antioxidant, a flavonoid antioxidant, or a carotenoid antioxidant; and based on a total mass of the electrolyte, a mass percentage of the second additive is 0.01% to 1%, and preferably, the mass percentage of the second additive is 0.05% to 0.5%.

6. The battery according to claim 1, wherein the electrolyte further comprises a third additive, and the third additive comprises a compound represented by formula III-A: 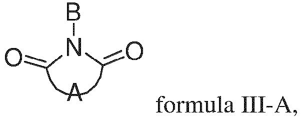
wherein in formula III-A, A is selected from a substituted or unsubstituted C₁-C₆ alkylene group, a substituted or unsubstituted C₂-C₆ alkenylene group, a substituted or unsubstituted C₁-C₅ heteroatom-containing alkylene group, or a substituted or unsubstituted C₂-C₁₀ heteroatom-containing alkenylene group, and B is selected from hydrogen, a substituted or unsubstituted C₁-C₆ alkyl group, or a substituted or unsubstituted C₂-C₆ alkenyl group;
when substituted, a substituent group is selected from at least one of halogen, an amino group, or a cyano group, and the heteroatom is selected from at least one of S or N; and
based on a total mass of the electrolyte, a mass percentage of the third additive is 0.01% to 2%, and preferably, the mass percentage of the third additive is 0.1% to 1%.

7. The battery according to claim 6, wherein the third additive comprises at least one of compounds represented by formula III-1 to formula III-6:

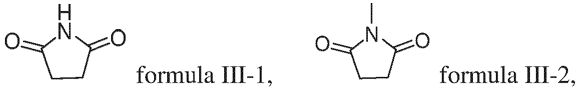

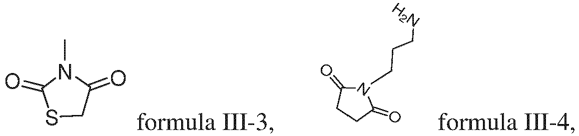

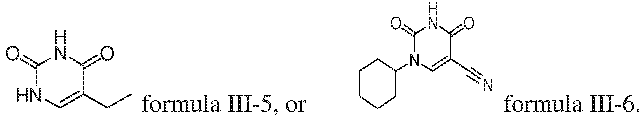

8. The battery according to claim 1, wherein the electrolyte further comprises a fourth additive, and the fourth additive comprises a compound represented by formula IV-A: 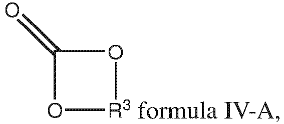 wherein R³ is selected from a substituted or unsubstituted C₁-C₆ alkylene group or a substituted or unsubstituted C₂-C₆ alkenylene group, and when substituted, a substituent group is selected from halogen, a C₁-C₆ alkyl group, or a C₂-C₆ alkenyl group.

9. The battery according to claim 8, wherein the fourth additive is selected from at least one of compounds represented by formula IV-1 to formula IV-12:

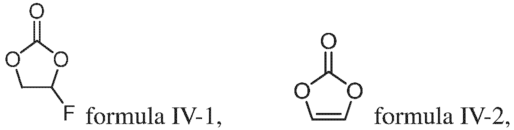

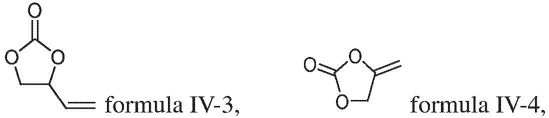

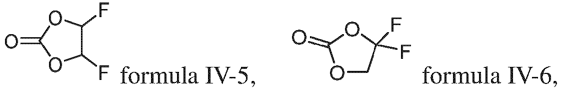

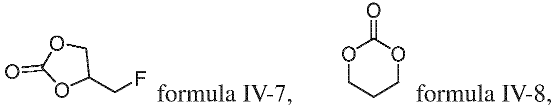

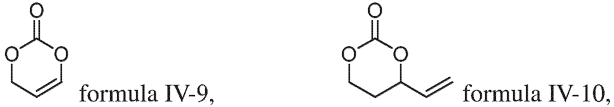

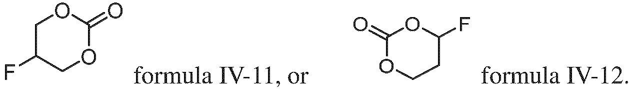

10. The battery according to any one of claims 1 to 9, wherein the electrolyte satisfies at least one of the following:
(4) based on a total mass of the electrolyte, a mass percentage of the compound represented by formula I-A is 0.01% to 5%, optionally 0.1% to 3.5%;
(5) based on the total mass of the electrolyte, a mass percentage of the compound represented by formula II-A is 0.01% to 5%, optionally 0.1% to 3.5%; or
(6) based on the total mass of the electrolyte, a sum of mass percentages of the compound represented by formula I-A and the compound represented by formula II-A is 0.1% to 5%, optionally 0.5% to 4%.

11. An electrochemical apparatus, comprising the battery according to any one of claims 1 to 10.

12. An electronic device, comprising the electrochemical apparatus according to claim 11.
